# EUROPEAN PATENT APPLICATION

(11) **EP 4 716 283 A1**
(43) Date of publication of application: **25.03.2026**
(21) Application number: 24806544.3
(22) Date of filing: 13.05.2024
(51) Int. Cl.: H04W 24/04

(54) **INFORMATION TRANSMISSION METHOD AND APPARATUS, AND USER EQUIPMENT, CORE NETWORK NODE AND NETWORK DEVICE**

(30) Priority: 15.05.2023 CN 202310544223
(71) Applicant: Datang Mobile Communications Equipment Co., Ltd., Beijing 100085 (CN)
(72) Inventor: REN, Bin, Beijing 100085 (CN); DA, Ren, Beijing 100085 (CN); REN, Xiaotao, Beijing 100085 (CN); FANG, Rongyi, Beijing 100085 (CN)
(74) Representative: Studio Torta S.p.A.
(86) International application number: PCT/CN2024/092850
(87) International publication number: WO 2024/235193

(57) **Abstract**

The present disclosure provides an information transmission method, device, terminal, core network node and network device. The method is performed by the terminal and includes: obtaining first information by measuring a downlink positioning reference signal sent by a network device according to a User Equipment receive phase error group (UE Rx PEG); and transmitting the first information to a core network node, where the first information includes: a phase measurement and/or a phase delay difference.

## Description

### CROSS-REFERENCE TO RELATED APPLICATION

This disclosure claims priority to the Chinese Patent Application No. 202310544223.3, filed with the China Patent Office on May 15, 2023, entitled "INFORMATION TRANSMISSION METHOD, DEVICE, TERMINAL, CORE NETWORK NODE AND NETWORK DEVICE", the entire contents of which are incorporated herein by reference.

### TECHNICAL FIELD

The present disclosure relates to the field of communication technology, and in particular, to an information transmission method, device, terminal, core network node and network device.

### BACKGROUND

Related technologies are discussing 5G New Radio (NR) carrier phase positioning (CPP) technical solutions. How to eliminate or reduce the influence of phase delay (i.e., phase error) of different transmit (Tx)/receive (Rx) transmission channels of a base station/user equipment (UE, also known as a terminal) on NR CPP is an urgent problem to be solved.

### SUMMARY

Embodiments of the present disclosure provide an information transmission method, device, terminal, core network node and network device to eliminate or reduce the influence of phase delay of different Tx/Rx transmission channels of a base station/UE on NR CPP.

In order to solve the above technical problems, an embodiment of the present disclosure provides an information transmission method, performed by a terminal, comprising:
obtaining first information by measuring a downlink positioning reference signal sent by a network device according to a User Equipment receive phase error group (UE Rx PEG);
transmitting the first information to a core network node;
wherein the first information comprises: a phase measurement and/or a phase delay difference.

In some embodiments, when the first information comprises the phase measurement, the obtaining first information by measuring a downlink positioning reference signal sent by a network device according to a UE Rx PEG comprises one of the following:
measuring the same downlink positioning reference signal sent by the network device using different UE Rx PEGs, and obtaining phase measurements corresponding to the different UE Rx PEGs;
measuring different downlink positioning reference signals sent by the network device using the same UE Rx PEG, and obtaining phase measurements corresponding to different transmission and reception point transmit phase error groups (TRP Tx PEGs).

In some embodiments, when the first information comprises the phase delay difference, the obtaining first information by measuring a downlink positioning reference signal sent by a network device according to a UE Rx PEG comprises one of the following:
measuring the same downlink positioning reference signal sent by the network device using different UE Rx PEGs, and obtaining a phase delay difference between the different UE Rx PEGs;
measuring different downlink positioning reference signals sent by the network device using the same UE Rx PEG, and obtaining a phase delay difference between different TRP Tx PEGs.

In some embodiments, the UE Rx PEG satisfies at least one of the following:
the UE Rx PEG is associated with at least one phase measurement;
a receive phase error corresponding to the phase measurement included in the UE Rx PEG is within a first range;
wherein the receive phase error comprises:
   a phase error of an uncalibrated reception radio frequency chain or a remaining reception radio frequency chain after calibration and/or a phase error of a reception antenna;
   a phase center offset of an uncalibrated reception antenna phase center (APC) or a remaining reception APC after calibration to a physical measurement reference point (MRP).

In some embodiments, the UE Rx PEG further comprises: a time change rate of the receive phase error.

In some embodiments, a TRP Tx PEG satisfies at least one of the following:
the TRP Tx PEG is associated with at least one downlink positioning reference signal;
a transmit phase error corresponding to the downlink positioning reference signal included in the TRP Tx PEG is within a second range;
wherein the transmit phase error comprises:
   a phase error of an uncalibrated transmission radio frequency chain or a remaining transmission radio frequency chain after calibration and/or a phase error of a transmission antenna;
   a phase center offset of an uncalibrated transmission APC or a remaining transmission APC after calibration to a physical antenna reference point (ARP).

In some embodiments, the TRP Tx PEG further comprises: a time change rate of the transmit phase error.

In some embodiments, when the first information comprises the phase measurement, the method further comprises:
reporting a first association relationship, wherein the first association relationship is used to indicate a correspondence between the UE Rx PEG and the phase measurement.

In some embodiments, the method further comprises:
receiving first request information sent by the core network node, wherein the first request information is used to request the terminal to obtain the first information.

In some embodiments, the method further comprises:
receiving a second association relationship sent by the core network node, wherein the second association relationship is used to indicate a correspondence between an identifier of a TRP Tx PEG and the downlink positioning reference signal.

In some embodiments, the TRP Tx PEG and a transmission and reception point transmission timing error group (TRP Tx TEG) are associated with the same downlink positioning reference signal;
and/or
the UE Rx PEG and a UE Rx TEG are associated with the same measurement.

An embodiment of the present disclosure further provides an information transmission method, performed by a core network node, comprising:
receiving first information reported by a terminal;
wherein the first information comprises: a phase measurement and/or a phase delay difference.

In some embodiments, the phase measurement comprises at least one of the following:
phase measurements corresponding to different User Equipment receive phase error groups (UE Rx PEGs);
phase measurements corresponding to different transmission and reception point transmit phase error groups (TRP Tx PEGs).

In some embodiments, the phase delay difference comprises at least one of the following:
a phase delay difference between different UE Rx PEGs;
a phase delay difference between different TRP Tx PEGs.

In some embodiments, when the first information comprises the phase measurement, the method further comprises:
receiving a first association relationship sent by the terminal, wherein the first association relationship is used to indicate a correspondence between a UE Rx PEG and the phase measurement.

In some embodiments, the method further comprises:
transmitting first request information to the terminal, wherein the first request information is used to request the terminal to obtain the first information.

In some embodiments, the method further comprises:
receiving a second association relationship sent by a network device, wherein the second association relationship is used to indicate a correspondence between an identifier of a TRP Tx PEG and a downlink positioning reference signal;
transmitting the second association relationship to the terminal.

In some embodiments, the method further comprises:
transmitting second request information to the network device, wherein the second request information is used to request obtaining the correspondence between the identifier of the TRP Tx PEG and the downlink positioning reference signal.

In some embodiments, the method further comprises:
correcting, according to the first information, a phase delay difference between phase measurements corresponding to different UE Rx PEGs and/or different TRP Tx PEGs;
calculating a location of the terminal based on a corrected phase measurement.

An embodiment of the present disclosure further provides an information transmission method, performed by a network device, comprising:
transmitting a second association relationship to a core network node, wherein the second association relationship is used to indicate a correspondence between an identifier of a transmission and reception point transmit phase error group (TRP Tx PEG) and a downlink positioning reference signal.

In some embodiments, the method further comprises:
transmitting the downlink positioning reference signal to a terminal.

An embodiment of the present disclosure further provides a terminal, comprising a memory, a transceiver, and a processor:
wherein the memory is configured to store a computer program; the transceiver is configured to transmit and receive data under the control of the processor; and the processor is configured to read the computer program in the memory and perform following operations:
obtaining first information by measuring a downlink positioning reference signal sent by a network device according to a User Equipment receive phase error group (UE Rx PEG);
transmitting, through the transceiver, the first information to a core network node;
wherein the first information comprises: a phase measurement and/or a phase delay difference.

In some embodiments, when the first information comprises the phase measurement, the processor is configured to read the computer program in the memory and perform at least one of the following operations:
measuring the same downlink positioning reference signal sent by the network device using different UE Rx PEGs, and obtaining phase measurements corresponding to the different UE Rx PEGs;
measuring different downlink positioning reference signals sent by the network device using the same UE Rx PEG, and obtaining phase measurements corresponding to different transmission and reception point transmit phase error groups (TRP Tx PEGs).

In some embodiments, when the first information comprises the phase delay difference, the processor is configured to read the computer program in the memory and perform at least one of the following operations:
measuring the same downlink positioning reference signal sent by the network device using different UE Rx PEGs, and obtaining a phase delay difference between the different UE Rx PEGs;
measuring different downlink positioning reference signals sent by the network device using the same UE Rx PEG, and obtaining a phase delay difference between different TRP Tx PEGs.

In some embodiments, the UE Rx PEG satisfies at least one of the following:
the UE Rx PEG is associated with at least one phase measurement;
a receive phase error corresponding to the phase measurement included in the UE Rx PEG is within a first range;
wherein the receive phase error comprises:
   a phase error of an uncalibrated reception radio frequency chain or a remaining reception radio frequency chain after calibration and/or a phase error of a reception antenna;
   a phase center offset of an uncalibrated reception antenna phase center (APC) or a remaining reception APC after calibration to a physical measurement reference point (MRP).

In some embodiments, the UE Rx PEG further comprises: a time change rate of the receive phase error.

In some embodiments, a TRP Tx PEG satisfies at least one of the following:
the TRP Tx PEG is associated with at least one downlink positioning reference signal;
a transmit phase error corresponding to the downlink positioning reference signal included in the TRP Tx PEG is within a second range;
wherein the transmit phase error comprises:
   a phase error of an uncalibrated transmission radio frequency chain or a remaining transmission radio frequency chain after calibration and/or a phase error of a transmission antenna;
   a phase center offset of an uncalibrated transmission APC or a remaining transmission APC after calibration to a physical antenna reference point (ARP).

In some embodiments, the TRP Tx PEG further comprises: a time change rate of the transmit phase error.

In some embodiments, when the first information comprises the phase measurement, the processor is configured to read the computer program in the memory and further perform following operations:
reporting a first association relationship, wherein the first association relationship is used to indicate a correspondence between the UE Rx PEG and the phase measurement.

In some embodiments, the processor is configured to read the computer program in the memory and further perform following operations:
receiving, through the transceiver, first request information sent by the core network node, wherein the first request information is used to request the terminal to obtain the first information.

In some embodiments, the processor is configured to read the computer program in the memory and further perform following operations:
receiving, through the transceiver, a second association relationship sent by the core network node, wherein the second association relationship is used to indicate a correspondence between an identifier of a TRP Tx PEG and the downlink positioning reference signal.

In some embodiments, the TRP Tx PEG and a transmission and reception point transmission timing error group (TRP Tx TEG) are associated with the same downlink positioning reference signal;
and/or
the UE Rx PEG and a UE Rx TEG are associated with the same measurement.

An embodiment of the present disclosure further provides a core network node, comprising a memory, a transceiver, and a processor:
wherein the memory is configured to store a computer program; the transceiver is configured to transmit and receive data under the control of the processor; and the processor is configured to read the computer program in the memory and perform following operations:
receiving, through the transceiver, first information reported by a terminal;
wherein the first information comprises: a phase measurement and/or a phase delay difference.

In some embodiments, the phase measurement comprises at least one of the following:
phase measurements corresponding to different User Equipment receive phase error groups (UE Rx PEGs);
phase measurements corresponding to different transmission and reception point transmit phase error groups (TRP Tx PEGs).

In some embodiments, the phase delay difference comprises at least one of the following:
a phase delay difference between different UE Rx PEGs;
a phase delay difference between different TRP Tx PEGs.

In some embodiments, when the first information comprises the phase measurement, the processor is configured to read the computer program in the memory and further perform following operations:
receiving, through the transceiver, a first association relationship sent by the terminal, wherein the first association relationship is used to indicate a correspondence between a UE Rx PEG and the phase measurement.

In some embodiments, the processor is configured to read the computer program in the memory and further perform following operations:
transmitting, through the transceiver, first request information to the terminal, wherein the first request information is used to request the terminal to obtain the first information.

In some embodiments, the processor is configured to read the computer program in the memory and further perform following operations:
receiving, through the transceiver, a second association relationship sent by a network device, wherein the second association relationship is used to indicate a correspondence between an identifier of a TRP Tx PEG and a downlink positioning reference signal;
transmitting the second association relationship to the terminal.

In some embodiments, the processor is configured to read the computer program in the memory and further perform following operations:
transmitting, through the transceiver, second request information to the network device, wherein the second request information is used to request obtaining the correspondence between the identifier of the TRP Tx PEG and the downlink positioning reference signal.

In some embodiments, the processor is configured to read the computer program in the memory and further perform following operations:
correcting, according to the first information, a phase delay difference between phase measurements corresponding to different UE Rx PEGs and/or different TRP Tx PEGs;
calculating a location of the terminal based on a corrected phase measurement.

An embodiment of the present disclosure further provides a network device, comprising a memory, a transceiver, and a processor:
wherein the memory is configured to store a computer program; the transceiver is configured to transmit and receive data under the control of the processor; and the processor is configured to read the computer program in the memory and perform following operations:
transmitting, through the transceiver, a second association relationship to a core network node, wherein the second association relationship is used to indicate a correspondence between an identifier of a transmission and reception point transmit phase error group (TRP Tx PEG) and a downlink positioning reference signal.

In some embodiments, the processor is configured to read the computer program in the memory and further perform following operations:
transmitting, through the transceiver, the downlink positioning reference signal to a terminal.

An embodiment of the present disclosure further provides an information transmission device, applied to a terminal, comprising:
a first obtaining unit, configured to obtain first information by measuring a downlink positioning reference signal sent by a network device according to a User Equipment receive phase error group (UE Rx PEG);
a first transmitting unit, configured to transmit the first information to a core network node;
wherein the first information comprises: a phase measurement and/or a phase delay difference.

An embodiment of the present disclosure further provides an information transmission device, applied to a core network node, comprising:
a first receiving unit, configured to receive first information reported by a terminal;
wherein the first information comprises: a phase measurement and/or a phase delay difference.

An embodiment of the present disclosure further provides an information transmission device, applied to a network device, comprising:
a second transmitting unit, configured to transmit a second association relationship to a core network node, wherein the second association relationship is used to indicate a correspondence between an identifier of a transmission and reception point transmit phase error group (TRP Tx PEG) and a downlink positioning reference signal.

An embodiment of the present disclosure further provides a processor-readable storage medium storing a computer program, wherein the computer program is configured to cause a processor to perform the above method.

The beneficial effects of the present disclosure are as follows.

The above solution obtains a phase measurement and/or a phase delay difference by measuring a downlink positioning reference signal sent by a network device according to a UE Rx PEG, and transmits the phase measurement and/or the phase delay difference to a core network node, assisting the core network node to adjust the phase measurement, thereby improving the accuracy of the terminal location calculation.

### BRIEF DESCRIPTION OF THE DRAWINGS

In order to more clearly illustrate the technical solutions in the embodiments of the present disclosure or related technologies, the following briefly introduces the drawings required for use in the embodiments or related technical descriptions. Obviously, the drawings described below are only some embodiments recorded in the present disclosure. For ordinary technicians in the field, other drawings can be obtained based on these drawings without paying any creative efforts.
FIG. 1 shows a structural diagram of a network system applicable to an embodiment of the present disclosure;
FIG. 2 shows a first flowchart of an information transmission method according to an embodiment of the present disclosure;
FIG. 3 shows a second flowchart of an information transmission method according to an embodiment of the present disclosure;
FIG. 4 shows a third flowchart of an information transmission method according to an embodiment of the present disclosure;
FIG. 5 shows a first unit schematic diagram of an information transmission device according to an embodiment of the present disclosure;
FIG. 6 shows a structural diagram of a terminal according to an embodiment of the present disclosure;
FIG. 7 shows a second unit schematic diagram of an information transmission device according to an embodiment of the present disclosure;
FIG. 8 shows a third unit schematic diagram of an information transmission device according to an embodiment of the present disclosure;
FIG. 9 shows a structural diagram of a core network node according to an embodiment of the present disclosure.

### DETAILED DESCRIPTION

The technical solutions in the embodiments of the present disclosure will be clearly and completely described below in conjunction with the drawings in the embodiments of the present disclosure. Obviously, the described embodiments are only part of the embodiments of the present disclosure, rather than all the embodiments. Based on the embodiments of the present disclosure, all other embodiments obtained by those skilled in the art without creative work shall fall within the scope of protection of the present disclosure.

The terms "first", "second", and the like in the description and claims of the present disclosure are used to distinguish similar objects but not necessarily to describe a particular sequence or order. It is to be understood that the terms so used are interchangeable under appropriate circumstances such that the embodiments of the disclosure described herein may be practiced in sequences other than those illustrated or described herein. In addition, the terms "comprise" and "have" and any variations thereof are intended to cover a non-exclusive inclusion. For example, a process, method, system, product or device that includes a series of steps or elements is not necessarily limited to those steps or elements expressly listed but may include other steps or elements not expressly listed or inherent to such process, method, product or device.

In the embodiments of the present disclosure, the term "and/or" describes an association relationship of associated objects, indicating that three relationships may exist. For example, A and/or B may represent three situations: A exists alone, A and B exist at the same time, and B exists alone. The character "/" generally indicates that previous and next associated objects are in an "or" relationship. In the embodiments of the present disclosure, the term "a plurality of (multiple)" refers to two or more than two, and other quantifiers are similar thereto.

In the embodiments of the present disclosure, words such as "exemplary" or "for example" are used to indicate examples, instances or illustrations. Any embodiment or design described as "exemplary" or "for example" in the embodiments of the present disclosure should not be construed as preferred or advantageous over other embodiments or designs. Rather, the use of words such as "exemplary" or "for example" is intended to present relevant concepts in a concrete fashion.

The following is a brief description of relevant concepts involved in this disclosure.

### 1. Definition of Transmission/Reception Timing Error Group (Tx/Rx TEG)

In radio communication positioning, a timing error of a transmission positioning reference signal and a timing error of a reception positioning reference signal directly affect a time measurement and an accuracy of positioning calculation. A transmitter (User Equipment (UE) or Transmission and reception point (TRP)) may have multiple Radio Frequency (RF) transmission chains (Tx chains). The transmitter may use different RF Tx chains to transmit positioning reference signals. Each RF Tx chain may have the same or different time delay errors (or transmission timing errors). Likewise, a receiver (UE or TRP) may have multiple RF reception chains (Rx chains). The receiver may use different RF reception chains to receive positioning reference signals. Each Rx RF chain may have the same or different transmission timing errors.

Definitions of a transmission timing error and a reception timing error are given below respectively.

Tx timing error: from the perspective of signal transmission, there is a time delay from the time a baseband generates a digital signal to the time a Tx antenna transmits a RF signal. To support positioning, the UE/TRP may implement internal calibration/compensation of the Tx time delay for transmission of a downlink (DL) positioning reference signal (PRS)/uplink (UL) sounding reference signal (SRS), where the calibration may also include calibration/compensation of relative time delay between different RF chains in the same TRP/UE. Calibration cannot ideally eliminate all errors. A remaining Tx time delay after calibration or an uncalibrated Tx delay is defined as the Tx timing error.

Rx Timing Error: from the perspective of signal reception, there is a time delay from the time the RF signal reaches the Rx antenna to the time the signal is digitized and time-stamped at the baseband. To support positioning, the UE/TRP may implement internal calibration/compensation of the Rx time delay before reporting measurements obtained from the DL PRS/UL SRS signals, which may also include calibration/compensation of the relative time delay between different RF chains in the same TRP/UE. Calibration cannot ideally eliminate all errors. A remaining Rx time delay after calibration or an uncalibrated Rx delay is defined as the Rx timing error.

To improve New Radio (NR) positioning accuracy, 3GPP defines the following reception timing error groups (Rx TEGs) and transmission timing error groups (Tx TEGs):
Terminal Reception Timing Error Group (UE Rx TEG): a UE Rx TEG is associated with one or more UE positioning measurements; reception timing errors of UE positioning measurements in the same UE Rx TEG must be within the same range.

Transmission and reception point Timing Error Group (TRP Rx TEG): a TRP Rx TEG is associated with one or more TRP positioning measurements; reception timing errors of positioning measurements in the same TRP Rx TEG must be within the same range.

The Tx TEG is used to measure a transmission timing error value and is associated with one or more transmission positioning reference signal resources. The difference in transmission timing error between any pair of positioning reference signal resources belonging to the same Tx TEG is within a certain range. For the uplink, UE Tx TEG corresponds to an uplink sounding reference signal for positioning (SRS-Pos); for the downlink, TRP Tx TEG corresponds to a downlink PRS.

### 2. Reporting of UE Rx TEG/TRP Tx TEG measurements for downlink time difference of arrival (DL-TDOA)

2.1. For a UE-assisted DL-TDOA positioning method, in order to eliminate influence of UE Rx timing error and TRP Tx timing error, the UE provides a location management function (LMF) with association information of a Reference Signal Time Difference (RSTD) measurement and the UE Rx TEG, and the TRP provides the LMF with association information of a DL PRS resource and the TRP Tx TEG.

The reason is that the UE/TRP does not know the actual timing error corresponding to each UE Rx TEG/TRP Tx TEG or the timing error difference between TEGs, but the TRP knows the association information between the DL PRS resource and the TRP Tx TEG, and the UE knows the association information between the DL PRS resource or RSTD measurement and the Rx TEG. The UE only needs to provide the association information between the RSTD measurement and the UE Rx TEG to the LMF, and the TRP provides the association information between the DL PRS resource and the TRP Tx TEG to the LMF. With such information, the LMF knows the DL PRS resources associated with the same TRP Tx TEG and the RSTD measurements associated with the same UE Rx TEG, which helps the LMF eliminate the influence of TRP Tx timing error and UE Rx timing error.

2.2. The UE includes two TEG IDs for RSTD measurements, where TEG ID #1 corresponds to RSTD reference time and TEG ID #2 corresponds to each DL RSTD measurement.

2.3. Based on UE capabilities, the LMF is supported to request the UE to measure the same DL PRS resource from the TRP with N different UE Rx TEGs and report corresponding multiple RSTD measurements, where N=[2, 3, 4, 6, 8]. The maximum value of N depends on the UE capability and is applicable to all DL PRS positioning frequency layers. It is noted that if N is not explicitly included in the request, the UE determines the number of different UE Rx TEGs to measure the same DL PRS resource within its capabilities. Timestamps of multiple RSTD measurements in the same measurement report may be the same or different. It is noted that all RSTD measurements use the same single timing reference.

There is currently no solution to eliminate or reduce the influence of phase delay in different Tx/Rx transmission channels of a base station/UE on NR CPP. If the phase delay of different Tx/Rx transmission channels of the base station/UE is not correctly defined and eliminated or reduced, downlink CPP positioning cannot be completed, or the UE must measure more TRP downlink positioning reference signals to complete the positioning.

The following describes embodiments of the present disclosure in conjunction with the accompanying drawings. The information transmission method, device, terminal, core network node, and network device provided by the embodiments of the present disclosure may be applied to a radio communication system. The radio communication system may be a system using 5th-generation (5G) mobile communication technology (hereinafter referred to as a 5G system). Those skilled in the art may understand that the 5G NR system is only an example and not a limitation.

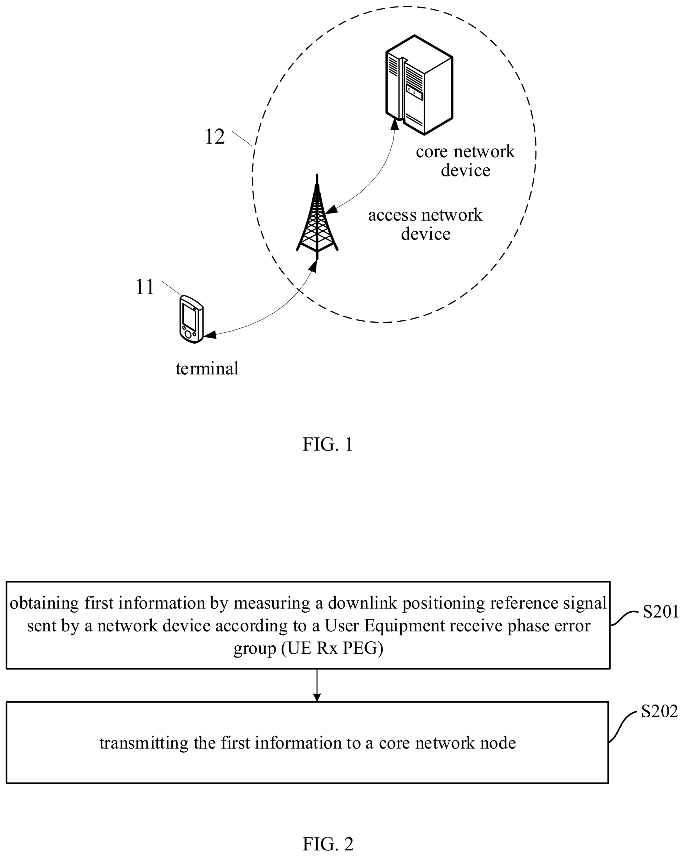

FIG. 1 shows a block diagram of a radio communication system to which embodiments of the present disclosure may be applied. The radio communication system includes a terminal 11 and a network side device 12. The terminal 11 may be a terminal side device such as a mobile phone, a tablet personal computer, a laptop computer or a notebook computer, a personal digital assistant (PDA), a handheld computer, a netbook, an ultra-mobile personal computer (UMPC), a mobile internet device (MID), an augmented reality (AR)/virtual reality (VR) device, a robot, a wearable device, a vehicle user equipment (VUE), a pedestrian user equipment (PUE), a smart home (home appliances with radio communication capabilities, such as refrigerators, televisions, washing machines, or furniture), a game console, a personal computer (PC), an ATM or a self-service machine, a sensing service terminal, various sensors, a smart camera, and the like. The wearable device includes: a smart watch, a smart bracelet, a smart headphone, smart glasses, smart jewelry (smart bracelets, smart bracelets, smart rings, smart necklaces, smart anklets, smart anklets, etc.), a smart wristband, smart clothing, etc. It should be noted that the embodiment of the present disclosure does not limit the specific type of the terminal 11. The network side device 12 may include an access network device or a core network device, where the access network device may also be referred to as a radio access network device, a radio access network (RAN), a radio access network function, or a radio access network unit. The access network device may include a base station, a wireless local area network (WLAN) access point or a WiFi node, etc. The base station may be referred to as a node B, an evolved node B (eNB), an access point, a base transceiver station (BTS), a radio base station, a radio transceiver, a basic service set (BSS), an extended service set (ESS), a home B node, a home evolved B node, a transmission and reception point (TRP), a perception signal transmitting device, a perception information receiving device or other appropriate terms in the field. As long as the same technical effect is achieved, the base station is not limited to specific technical vocabulary. It should be noted that in the embodiment of the present disclosure, only the base station in the NR system is used as an example to introduce, and the specific type of the base station is not limited. The core network device may include but is not limited to at least one of the following: a core network node, a core network function, a mobility management entity (MME), an access and mobility management function (AMF), a session management function (SMF), a user plane function (UPF), a policy control function (PCF), a policy and charging rules function (PCRF), an edge application server discovery function (EASDF), a unified data management (UDM), a unified data repository (UDR), a home subscriber server (HSS), a centralized network configuration (CNC), a network repository function (NRF), a network exposure function (NEF), a local NEF (L-NEF), a binding support function (BSF), an application function (AF), a sensing function (SF), etc.

The embodiments of the present disclosure provide an information transmission method, device, terminal, core network node and network device, to eliminate or reduce the influence of the phase delay of different Tx/Rx transmission channels of the base station/UE on the NR CPP.

The method and the device are based on the same application concept. Since the principles of solving problems by the method and the device are similar, the implementation of the device and the method can refer to each other, and the repeated parts will not be repeated.

As shown in FIG. 2, an embodiment of the present disclosure provides an information transmission method, performed by a terminal, including:
Step S201: obtaining first information by measuring a downlink positioning reference signal sent by a network device according to a User Equipment receive phase error group (UE Rx PEG);
Step S202: transmitting the first information to a core network node;
where the first information includes: a phase measurement and/or a phase delay difference.

It should be noted that by transmitting the phase measurement and/or the phase delay difference to the core network node, the core network node is assisted in adjusting the phase delay, thereby ensuring that a terminal location obtained by calculation is more accurate.

The core network node mentioned in the embodiments of the present disclosure mainly refers to a LMF, i.e., a network function entity (a network function node) used to locate the terminal; the network device refers to a base station or a TRP.

It should be noted that in order to smoothly carry out the embodiments of the present disclosure, the embodiments of the present disclosure need to first define following concepts.

### 1. Transmit phase error (Tx Phase Error)

It should be noted that the transmit phase error mainly includes the following:
A11, a phase error of an uncalibrated transmission radio frequency chain or a remaining transmission radio frequency chain after calibration and/or a phase error of a transmission antenna;
A12: a phase center offset (PCO) of an uncalibrated transmission antenna phase center (APC) or a remaining transmission APC after calibration to a physical antenna reference point (ARP).

### 2. Receive phase error (Rx Phase Error)

It should be noted that the receive phase error mainly includes the following:
A21, a phase error of an uncalibrated reception radio frequency chain or a remaining reception radio frequency chain after calibration and/or a phase error of a reception antenna;
A22, a PCO of an uncalibrated reception APC or a remaining reception APC after calibration to a physical measurement reference point (MRP).

### 3. User Equipment receive phase error group (UE Rx PEG)

It should be noted that the UE Rx PEG refers to the Rx PEG corresponding to the terminal, and the UE Rx PEG satisfies at least one of the following:
A31. the UE Rx PEG is associated with at least one phase measurement;
It should be noted that the phase measurement includes at least one of the following: a downlink reference signal carrier phase (RSCP) measurement and a downlink reference signal carrier phase difference (RSCPD) measurement.

In some embodiments, each UE Rx PEG is associated with one or more phase measurements.

A32. a receive phase error corresponding to the phase measurement included in the UE Rx PEG is within a first range;

It should be noted that each UE Rx PEG has its own identifier (e.g., ID or index), and the receive phase errors of the phase measurements in the same UE Rx PEG must be within the same range. For example, the format of the UE Rx PEG is shown in Table 1. In some embodiments, the UE Rx PEG may be associated with one or more UE Rx RF chains and/or one or more UE Rx antennas.

**Table 1 The format of the UE Rx PEG**

| Rx PEG ID | the maximum Rx phase error value MAX_PE_Rx corresponding to Rx PEG |
|---|---|
| | (unit: centimeter or wavelength lambda, lambda=c/fc, c represents the speed of light 3.0*10^8 (m/s), and fc is a carrier frequency point.) |
| 0 | MAX_PE_Rx(0) |
| 1 | MAX_PE_Rx(1) |
| 2 | MAX_PE_Rx(2) |
| ... | ... |
| Q_Rx-1 | MAX_PE_Rx(Q_Rx-1) |

In this case, Q_Rx represents the maximum number of Rx PEGs, and MAX_PE_Rx represents the maximum Rx PEG phase error value corresponding to the Rx PEG ID. The values of Q_Rx and {MAX_PE_Rx(0), MAX_PE_Rx(1), ..., MAX_PE_Rx(Q_Rx-1)} may be pre-defined by the 3GPP protocol, or may be pre-configured, or notified by signaling, or determined by negotiation between the terminal and the network side; where the signaling includes Long Term Evolution Positioning Protocol (LPP), Radio Resource Control (RRC), Media Access Control Control Element (MAC-CE) or Downlink Control Information (DCI). For example, the value of MAX_PE_Rx is {1/50, 1/30, 1/20, 1/10} wavelengths. Different UE Rx PEGs are associated with different phase measurements but may have the same MAX_PE_Rx value.

In some embodiments, the UE Rx PEG further includes: a time change rate of the receive phase error.

### 4. Transmission and reception point Transmit phase error Group (TRP Tx PEG)

It should be noted that the TRP Tx PEG refers to the Tx PEG corresponding to the base station or TRP, and the TRP Tx PEG satisfies at least one of the following:
A41, the TRP Tx PEG is associated with at least one downlink positioning reference signal;
That is, one TRP Tx PEG is associated with one or more downlink positioning reference signals (DL PRSs).

In some embodiments, each TRP Tx PEG is associated with one or more downlink positioning reference signals.
A42, a transmit phase error corresponding to the downlink positioning reference signal included in the TRP Tx PEG is within a second range;
It should be noted that each TRP Tx PEG has its own identifier (e.g., ID or index), and the transmit phase errors of the DL PRSs in the same TRP Tx PEG must be within the same range. For example, the format of the TRP Tx PEG is shown in Table 2. In some embodiments, the TRP Tx PEG may also be associated with one or more TRP Tx RF chains and/or one or more TRP Tx antennas.

**Table 2 The format of the TRP Tx PEG**

| Tx PEG ID | the maximum Tx phase error value MAX_PE_Tx corresponding to Tx PEG |
|---|---|
| | (unit: centimeter or wavelength lambda, lambda=c/fc, c represents the speed of light 3.0*10^8 (m/s), and fc is a carrier frequency point) |
| 0 | MAX_PE_Tx(0) |
| 1 | MAX_PE_Tx(1) |
| 2 | MAX_PE_Tx(2) |
| ... | ... |
| Q_Tx-1 | MAX_PE_Tx(Q_Tx-1) |

In this case, Q_Tx represents the maximum number of Tx PEGs, and MAX_PE_Tx represents the maximum Tx PEG phase error value corresponding to the Tx PEG ID. The values of Q_Tx and {MAX_PE_Tx(0), MAX_PE_Tx(1), ..., MAX_PE_Tx(Q_Tx-1)} may be pre-defined by the 3GPP protocol, or may be pre-configured, or notified by signaling, or determined by negotiation between the terminal and the network side; where the signaling includes LPP, RRC, MAC-CE or DCI. For example, the value of MAX_PE_Tx is {1/50, 1/30, 1/20, 1/10} wavelengths. Different TRP Tx PEGs are associated with different DL PRS resources but may have the same MAX_PE_Tx value.

In some embodiments, the TRP Tx PEG further includes: a time change rate of the transmit phase error.
The specific implementation of the present disclosure is described below.

In some embodiments, when the first information includes the phase measurement, the obtaining first information by measuring a downlink positioning reference signal sent by a network device according to a terminal (UE) receive phase error group (Rx PEG) includes one of the following:
B11. measuring the same downlink positioning reference signal sent by the network device using different UE Rx PEGs, and obtaining phase measurements corresponding to the different UE Rx PEGs;
This situation refers to the terminal using different UE Rx PEGs to measure the same downlink positioning reference signal sent by the same network device (which may also be understood as the downlink positioning reference signal corresponding to the same TRP Tx PEG) to obtain phase measurements corresponding to different UE Rx PEGs.

B12. measuring different downlink positioning reference signals sent by the network device using the same UE Rx PEG, and obtaining phase measurements corresponding to different TRP Tx PEGs.

This situation refers to the terminal using the same UE Rx PEG to measure different downlink positioning reference signals sent by the same network device (which may also be understood as downlink positioning reference signals corresponding to different TRP Tx PEGs) to obtain phase measurements corresponding to different TRP Tx PEGs.

It should be noted that if the terminal performs measurement to obtain a phase measurement, in order to facilitate the core network node to clarify the correspondence between the phase measurement and the UE Rx PEG, in some embodiments, the method further includes:
reporting a first association relationship, where the first association relationship is used to indicate a correspondence between the UE Rx PEG and the phase measurement.

For example, the first association relationship is a list of the correspondence between identifiers (e.g., IDs or indexes) of UE Rx PEGs and phase measurements.

In some embodiments, when the first information includes the phase delay difference, the obtaining first information by measuring a downlink positioning reference signal sent by a network device according to a UE Rx PEG includes one of the following:
B21. measuring the same downlink positioning reference signal sent by the network device using different UE Rx PEGs, and obtaining a phase delay difference between the different UE Rx PEGs;
This situation refers to the terminal using different UE Rx PEGs to measure the same downlink positioning reference signal sent by the same network device (which may also be understood as the downlink positioning reference signal corresponding to the same TRP Tx PEG) to obtain the phase delay difference between different UE Rx PEGs.

B22. measuring different downlink positioning reference signals sent by the network device using the same UE Rx PEG, and obtaining a phase delay difference between different TRP Tx PEGs;
This situation refers to the terminal using the same UE Rx PEG to measure different downlink positioning reference signals sent by the same network device (which may also be understood as downlink positioning reference signals corresponding to different TRP Tx PEGs) to obtain the phase delay difference between different TRP Tx PEGs.

It should be noted that after the LMF receives the first information, the LMF may use the first information to correct the difference in phase delay between phase measurements corresponding to different UE Rx PEGs and/or different TRP Tx PEGs, and calculate a location of the terminal based on a corrected phase measurement, thereby improving the accuracy of the positioning calculation and further improving the positioning accuracy of the terminal.

For example, when reporting the phase measurement, the terminal also reports the association relationship between the phase measurement and the UE Rx PEG (e.g., ID). When the terminal uses different UE Rx PEGs to measure the same positioning reference signal (e.g., DL PRS) and reports the corresponding phase measurement to the LMF, the LMF can obtain the difference in phase delay (i.e., phase error) between the different UE Rx PEGs.

For example, when reporting the phase measurement, the terminal also reports the association relationship between the phase measurement and the UE Rx PEG (e.g., ID). When the terminal uses different UE Rx PEGs to measure the same positioning reference signal, the terminal directly reports the corresponding difference in phase delay (i.e., phase error) between the different UE Rx PEGs to the LMF.

It should be noted that in order for the terminal to obtain the correspondence between the phase measurement and the TRP Tx PEG, in some embodiments, in an implementation, before the obtaining first information by measuring a downlink positioning reference signal sent by a network device according to a User Equipment receive phase error group (UE Rx PEG), the method further includes:
receiving a second association relationship sent by the core network node, where the second association relationship is used to indicate a correspondence between an identifier of a TRP Tx PEG and the downlink positioning reference signal.

It should be noted that, generally, the terminal needs to obtain the second association relationship from the core network node when the terminal uses the same UE Rx PEG to measure different downlink positioning reference signals sent by the network device.

It should be noted that the second association relationship is sent by the network device to the core network node, and then forwarded by the core network node to the terminal.

In some embodiments, the first information may be actively reported by the terminal or reported by the terminal based on a request. In this case, the method further includes:
receiving first request information sent by the core network node, where the first request information is used to request the terminal to obtain the first information.

In some embodiments, when the first information includes the phase measurement and the phase delay difference, the obtaining first information by measuring a downlink positioning reference signal sent by a network device according to a terminal (UE) receive phase error group (Rx PEG) includes at least one of the following:
B31. measuring the same downlink positioning reference signal sent by the network device using different UE Rx PEGs, and obtaining phase measurements corresponding to the different UE Rx PEGs and a phase delay difference between the different UE Rx PEGs;
It should be noted here that the specific implementation process of obtaining the phase measurements corresponding to different UE Rx PEGs may be found in the above description and will not be repeated here; after obtaining the phase measurements corresponding to different UE Rx PEGs, the terminal may obtain the phase delay difference between different UE Rx PEGs based on the phase measurements corresponding to different UE Rx PEGs.

B32. measuring different downlink positioning reference signals sent by the network device using the same UE Rx PEG, and obtaining phase measurements corresponding to different TRP Tx PEGs and a phase delay difference between different TRP Tx PEGs.

It should be noted here that the specific implementation process of obtaining the phase measurements corresponding to different TRP Tx PEGs may be found in the above description and will not be repeated here; after obtaining the phase measurements corresponding to different TRP Tx PEGs, the terminal may obtain the phase delay difference between different TRP Tx PEGs based on the phase measurements corresponding to different TRP Tx PEGs.

In some embodiments, the terminal may further obtain second information by measuring a positioning reference signal sent by the network device according to a terminal reception timing error group (UE Rx TEG); and transmit the second information to the core network node;
where the second information includes: a timing measurement and/or a timing delay difference.

In some embodiments, when the second information includes the timing measurement, the obtaining second information by measuring a positioning reference signal sent by the network device according to a terminal reception timing error group (UE Rx TEG) includes one of the following:
measuring the same positioning reference signal sent by the network device using different UE Rx TEGs, and obtaining timing measurements corresponding to the different UE Rx TEGs.
measuring different positioning reference signals sent by the network device using the same UE Rx TEG, and obtaining timing measurements corresponding to different transmission and reception point transmission timing error groups (TRP Tx TEGs).

In some embodiments, when the first information includes the timing delay difference, the obtaining second information by measuring a positioning reference signal sent by the network device according to a terminal reception timing error group (UE Rx TEG) includes one of the following:
measuring the same positioning reference signal sent by the network device using different UE Rx TEGs, and obtaining a timing delay difference between the different UE Rx TEGs;
measuring different positioning reference signals sent by the network device using the same UE Rx TEG, and obtaining a timing delay difference between different TRP Tx TEGs.

In some embodiments, the timing measurement includes a downlink reference signal time difference (RSTD) measurement.

In some embodiments, before the obtaining second information by measuring a positioning reference signal sent by the network device according to a terminal reception timing error group (UE Rx TEG), the method further includes:
receiving a third association relationship sent by the core network node, where the third association relationship is used to indicate a correspondence between an identifier of the TRP Tx TEG and a positioning reference signal resource.

It should be noted that the third association relationship is sent by the network device to the core network node, and then forwarded by the core network node to the terminal.

It should be noted that, when the terminal reports the second information, the second information and the first information may be reported in the same signaling; the terminal may also use independent signaling to report the first information and the second information respectively.

In some embodiments, for a downlink, when reporting a phase measurement, the terminal may report an association relationship with a timing measurement. For example, the terminal may associate a phase measurement and a timing measurement measured using the same RF chain, or the terminal may report an association relationship between the UE Rx PEG and the UE Rx TEG.

It should also be noted that a DL RSCPD measurement may be associated with two PEG IDs, where PEG ID #1 corresponds to a RSCPD reference phase and PEG ID #2 corresponds to each DL RSCPD measurement. Preferably, if RSCPD and RSTD are reported jointly, the same TRP is used as the RSCPD reference phase and RSTD reference timing.

In some embodiments, for a DL RSCP measurement, the RSCP measurement is associated with only one PEG ID.

In some embodiments, the TRP Tx PEG and the TRP Tx TEG are associated with the same downlink positioning reference signal.

In some embodiments, the UE Rx PEG and the UE Rx TEG are associated with the same measurement. It should be noted that the measurement refers to the measurement obtained by measuring the same downlink positioning reference signal (i.e., the timing measurement and the phase measurement, which may be referred to as the positioning measurement here).

In some embodiments, for downlink differential measurements, the UE Rx PEG and the UE Rx TEG are associated with the same reference TRP.

It should be noted that the correspondence between the identifier of the TRP Tx TEG and the downlink reference signal, as well as the correspondence between the identifier of the TRP Tx PEG and the downlink positioning reference signal, may be reported by the network device to the core network node in the same signaling or different signaling, and then the core network node may notify the terminal of the correspondence between the identifier of the TRP Tx TEG and the downlink reference signal, as well as the correspondence between the identifier of the TRP Tx PEG and the downlink positioning reference signal in the same signaling or different signaling.

It should also be noted that, in an implementation of the embodiment of the present disclosure, based on terminal capabilities, the LMF is supported to request the terminal to measure a DL PRS of the same TRP with N different UE Rx PEGs (or UE Rx PEG and UE Rx TEG) and report corresponding multiple phase measurements. In this case, N=[2, 3, 4, 6, 8], the maximum value of N depends on the terminal capability and is applicable to all DL PRS positioning frequency layers.

It should be noted here that if N is not explicitly included in the network's request, the terminal determines the number of different UE Rx PEGs (or UE Rx PEG and UE Rx TEG) to measure the same DL PRS resource within its capabilities. Timestamps of multiple phase measurements/timing measurements in the same measurement report may be the same or different. All phase measurements/timing measurements use the same reference timing value.

For downlink positioning, taking a transmission device as a TRP and a reception device as a UE as an example, the specific implementation of the embodiment of the present disclosure is illustrated as follows.

The following steps are mainly implemented on the UE side:
Step 1: the UE obtains an association relationship between a TRP Tx PEG ID and a downlink positioning reference signal (DL PRS resource) based on the forwarding of the LMF, and obtains the definition of the UE Rx PEG.

In some embodiments, the terminal may also obtain the association relationship between the TRP Tx TEG ID and the downlink positioning reference signal (DL PRS resource) based on the forwarding of the LMF, and obtain the definition of the UE Rx TEG.

Step 2: the UE measures, based on the LMF request or autonomously, the same (or different) DL PRS resource sent by the same TRP using different (or the same) UE Rx PEGs, and obtains the phase measurements corresponding to different UE Rx PEGs (or different TRP Tx PEGs), or obtains the phase delay difference between different UE Rx PEGs (or TRP Tx PEGs).

Specifically, there are two implementations:
Implementation 1: the UE uses different UE Rx PEGs to measure the same DL PRS resource sent by the same TRP (i.e., the same TRP Tx PEG), obtains downlink RSCPD/RSCP phase measurements corresponding to different UE Rx PEGs, or obtains a phase delay difference of different UE Rx PEGs.

Implementation 2: the UE uses the same UE Rx PEG to measure the DL PRS resources corresponding to different TRP Tx PEGs sent by the same TRP, obtains phase measurements corresponding to different TRP Tx PEGs, or obtains a phase delay difference of different TRP Tx PEGs of the TRP.

In some embodiments, the UE may also use different (or the same) UE Rx TEGs to measure the same (or different) DL PRS resources sent by the same TRP based on LMF request or autonomously, and obtain timing measurements corresponding to different UE Rx TEGs (or different TRP Tx TEGs), or obtain a timing delay difference between different UE Rx TEGs (or TRP Tx TEGs).

Step 3: the UE reports to the LMF the phase measurements corresponding to different UE Rx PEGs (or different TRP Tx PEGs) or the phase delay difference corresponding to different UE Rx PEGs (or TRP Tx PEGs).

It should be noted that the content reported by the terminal is used for the LMF to correct the difference in phase delay (phase error) of different Tx/Rx transmission channels included in the phase measurement, thereby improving the accuracy of the positioning calculation.

In some embodiments, the UE reports to the LMF the phase measurements corresponding to different UE Rx TEGs (or different TRP Tx TEGs) or the timing delay difference corresponding to different UE Rx TEGs (or TRP Tx TEGs). That is, the content reported by the terminal may also be used by the LMF to correct the difference in time delay (timing error) of different Tx/Rx transmission channels included in the timing measurement, thereby improving the accuracy of the positioning calculation.

In some embodiments, the Rx REG and Rx TEG may be reported together or separately, that is, reported simultaneously or separately in the same measurement report. In some embodiments, the Rx PEG and Rx TEG are associated with the same measurement, and for downlink differential measurements, are associated with the same reference TRP.

Following two modes are further included:
Mode 1: when reporting the phase measurement, the UE also reports the association relationship between the phase measurement and the UE Rx PEG (e.g., ID). When the UE uses different UE Rx PEGs to measure the same downlink positioning reference signal (DL PRS) and reports the corresponding phase measurement to the LMF, the LMF may obtain the difference in phase delay (i.e., phase error) of the different UE Rx PEGs.

Mode 2: when reporting the phase measurement, the UE also reports the association relationship between the phase measurement and the UE Rx PEG (e.g., ID). When the UE uses different UE Rx PEGs to measure the same downlink positioning reference signal, the UE directly reports the difference in phase delay (i.e., phase error) of the corresponding UE Rx PEGs to the LMF. In some embodiments, the UE may also report the difference in timing delay (i.e., timing error) of the corresponding UE Rx TEG to the LMF.

For mode 1, it may be associated with the timestamp to facilitate the LMF to calculate the time change rate of the difference; for mode 2, the time change rate of the difference may be further reported. During the above process of obtaining the phase measurements, the UE may perform averaging or smoothing processing on the phase measurements based on effective time period information bound between the Rx PEG/Tx PEG and the phase measurement/downlink positioning reference signal resource. The effective time period information includes the following three methods: pre-defined by protocol, reported by UE/base station in real time, and the LMF notifies a new PEG association relationship. In some embodiments, during the above process of obtaining the timing measurements, the UE may perform averaging or smoothing processing on the timing measurements based on effective time period information bound between the Rx TEG/Tx TEG and the timing measurement/downlink positioning reference signal resource. The effective time period information includes the following three methods: pre-defined by protocol, reported by UE/base station in real time, and the LMF notifies a new PEG association relationship.

On the LMF side, the main implementation process includes:
Step 1: for downlink positioning, the LMF receives the correspondence between the TRP Tx PEG ID and the downlink positioning reference signal (e.g., DL PRS resource) reported by the TRP, and forwards the correspondence to the UE.

Step 2: the LMF uses the phase measurements corresponding to different UE Rx PEGs (or different TRP Tx PEGs) or the difference in phase delay corresponding to different UE Rx PEGs (or TRP Tx PEGs) reported by the UE in step 3 (and the possible change rate of the error corresponding to the PEG) to correct the difference in phase delay between the phase measurements corresponding to different UE Rx PEGs (or TRP Tx PEGs), and then calculates a UE location based on the corrected phase measurement to improve the positioning calculation accuracy.

In some embodiments, the LMF uses the timing measurements corresponding to different UE Rx TEGs (or different TRP Tx TEGs) or the difference in phase delay corresponding to different UE Rx TEGs (or TRP Tx TEGs) reported by the UE in step 3 (and the possible change rate of the error corresponding to the TEG) to correct the difference in timing delay between the timing measurements corresponding to different UE Rx TEGs (or TRP Tx TEGs), and then calculates a UE location based on the corrected timing measurement to improve the positioning calculation accuracy.

On the TRP side, the main implementation process includes:
Step 1: for downlink positioning, the TRP reports the association relationship between the TRP Tx PEG ID and the downlink positioning reference signal (e.g., DL PRS resource) to the LMF.

In some embodiments, the TRP may also report the association relationship between the TRP Tx TEG ID and the downlink positioning reference signal (e.g., DL PRS resource) to the LMF.

In some embodiments, the Tx PEG and Tx TEG may be reported simultaneously in the same reporting signaling, or may be reported separately in different reporting signaling. In some embodiments, the Tx PEG and the Tx TEG are associated with the same downlink positioning reference signal.

The advantages achieved by the embodiments of the present disclosure are described below using two examples.

Example 1: it is assumed that the UE has two Rx transmission channels. At a certain moment (T1), the UE uses Rx transmission channel 1 to receive and measure DL PRS resources 1 to M from TRP#1 to TRP#M. At the same time, the UE uses Rx transmission channel 2 to receive and measure DL PRS resources (M+1) to (M+N) from TRP#(M+1) to TRP#(M+N).

If the DL-TDOA positioning method is used, according to relevant protocol, the time delays of Rx transmission channels 1 and 2 may be represented by Rx TEG 1 and Rx TEG 2, and the UE may report the correspondence between Rx TEG and the measurement to the LMF. Even if each TRP is received by only one Rx transmission channel, since the LMF may eliminate the influence of the timing delays of the two transmission channels based on the UE's reporting quantity in step 2, it is necessary to measure the DL PRS signals of at least M+N=4 TRPs and obtain the RSTD measurements to calculate a 3D location of the UE.

If the NR CPP positioning method is used, the protocol needs to introduce support for reporting the relationship between the phase delay of the UE Rx transmission channel and the measurement to the LMF. Assuming that the phase delays of the two Rx transmission channels of the UE may be represented by PEG1 and PEG2 respectively, the protocol needs to support reporting the relationship between PEG1 and PEG2 and the phase measurement to the LMF. Otherwise, the LMF does not know the phase delays of the UE's Rx transmission channels and cannot eliminate the influence of the phase delays of the transmission channels. Even if each TRP is received by only one Rx transmission channel, since the LMF may eliminate the influence of the time delays of the two transmission channels based on the UE's reporting quantity in step 2, it is necessary to measure the DL PRS signals of at least M+N=4 TRPs and obtain 4 RSCP/RSCPD measurements to calculate a 3D location of the UE.

Example 2: it is also assumed that the UE has two Rx transmission channels. At a certain moment T1, the UE uses Rx transmission channel 1 to receive and measure DL PRS resources 1 to M from TRP#1 to TRP#M; at a certain moment T2, the UE uses Rx transmission channel 2 to receive and measure DL PRS resources (M+1) to (M+N) from TRP#(M+1) to TRP#(M+N).

If the DL-TDOA positioning method is used, according to relevant protocol, the time delays of Rx transmission channels 1 and 2 may be represented by Rx TEG 1 and Rx TEG 2, and the UE may report the relationship between Rx TEG and the measurement to the LMF. Since the LMF may eliminate the influence of the timing errors of the two transmission channels in step 2 (further, the LMF may also compensate for the change in the timing error corresponding to the TEG at moment T1 and moment T2 based on the change rate of the TEG from moment T1 to moment T2 obtained in step 2), it is necessary to measure the DL PRS signals of at least M+N=4 TRPs, obtain 3 RSTD measurements, and calculate a 3D location of the UE.

If the CPP positioning method is used, the protocol not only needs to introduce support for reporting the association relationship between the phase delay of the UE Rx transmission channel and the measurement to the LMF, but also needs to support the UE to use different Rx transmission channels to measure the DL PRS resources from the same TRP. Since the LMF may eliminate the influence of the phase errors of the two transmission channels in step 2 (further, the LMF may also compensate for the change in the timing error corresponding to the PEG at moment T1 and moment T2 based on the change rate of the PEG from moment T1 to moment T2 obtained in step 2), it is necessary to measure the DL PRS signals of at least M+N=4 TRPs and obtain 3 RSCPD measurements to eliminate the influence of the phase delays of the two transmission channels and calculate a 3D location of the UE.

In summary, at least one embodiment of the present disclosure provides a downlink positioning method based on 5G NR PEG, which is used to correct the phase delay difference (or the phase delay difference and the time delay difference of the transmission channel) of different Tx/Rx transmission channels included in the positioning measurement, thereby improving the accuracy of the positioning calculation or reducing the requirements for locating a transmission node , thereby ensuring the accuracy of terminal positioning.

The technical solutions provided by the embodiments of the present disclosure may be applied to a variety of systems, especially 5G systems. For example, applicable systems may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. These various systems all include terminals (also called terminal devices) and network devices. The system may also include core network parts, such as the Evolved Packet System (EPS), 5G System (5GS), etc.

The terminal involved in the embodiments of the present disclosure may also be referred to as a terminal device, which may be a device that provides voice and/or data connectivity to a user, a handheld device with a radio connection function, or other processing devices connected to a radio modem. In different systems, the name of the terminal device may also be different. For example, in the 5G system, the terminal device may be called User Equipment (UE). A radio terminal device may communicate with one or more core networks (CNs) via a radio access network (RAN). The radio terminal device may be a mobile terminal device, such as a mobile phone (or a "cellular" phone) and a computer with a mobile terminal device, for example, a portable, pocket-sized, handheld, computer-built-in or vehicle-mounted mobile device, which exchange language and/or data with the radio access network. For example, devices such as Personal Communication Service (PCS) phones, cordless phones, Session Initiated Protocol (SIP) phones, Wireless Local Loop (WLL) stations, Personal Digital Assistants (PDAs), and the like. The radio terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present disclosure.

The network device involved in the embodiments of the present disclosure may be a base station, which may include multiple cells providing services for the terminal. Depending on the specific application scenario, the base station may also be called an access point, or may be a device in an access network that communicates with radio terminal devices through one or more sectors on the air interface, or may be called another name. The network device may be used to convert received air frames into and out of Internet Protocol (IP) packets, acting as a router between the radio terminal device and the rest of the access network, which may include an Internet Protocol (IP) communications network. The network device also coordinates the management of attributes of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolved network device (evolutional Node B, eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., but is not limited in the embodiments of the present disclosure. In some network structures, the network device may include centralized unit (CU) nodes and distributed unit (DU) nodes, and the centralized unit and the distributed unit may also be arranged geographically separately.

The network device and the terminal device may each use one or more antennas for Multiple Input Multi Output (MIMO) transmission. MIMO transmission may be single user MIMO (SU-MIMO) or multiple user MIMO (MU-MIMO). Depending on the form and number of antenna combinations, MIMO transmission may be 2-dimension MIMO (2D-MIMO), 3-dimension MIMO (3D-MIMO), full dimension MIMO (FD-MIMO), or massive MIMO (massive-MIMO), or may also be diversity transmission, precoding transmission, or beamforming transmission.

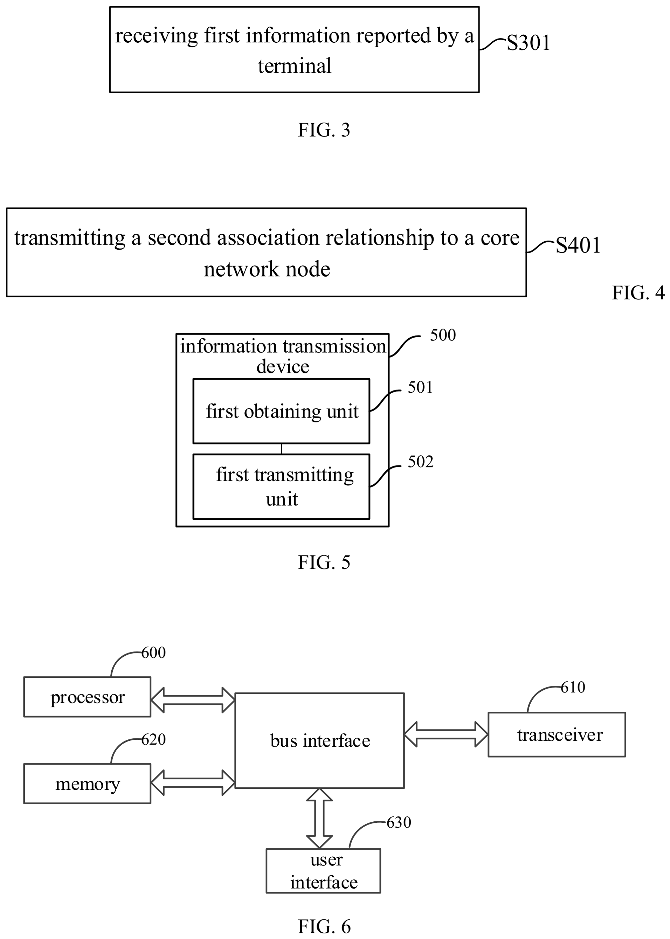

As shown in FIG. 3, an embodiment of the present disclosure provides an information transmission method, performed by a core network node, including:
Step S301, receiving first information reported by a terminal;
where the first information includes: a phase measurement and/or a phase delay difference.

In some embodiments, the phase measurement includes at least one of the following:
phase measurements corresponding to different User Equipment receive phase error groups (UE Rx PEGs);
phase measurements corresponding to different transmission and reception point transmit phase error groups (TRP Tx PEGs).

In some embodiments, the phase delay difference includes at least one of the following:
a phase delay difference between different UE Rx PEGs;
a phase delay difference between different TRP Tx PEGs.

In some embodiments, when the first information includes the phase measurement, the method further includes:
receiving a first association relationship sent by the terminal, where the first association relationship is used to indicate a correspondence between a UE Rx PEG and the phase measurement.

In some embodiments, the method further includes:
transmitting first request information to the terminal, where the first request information is used to request the terminal to obtain the first information.

In some embodiments, the method further includes:
receiving a second association relationship sent by a network device, where the second association relationship is used to indicate a correspondence between an identifier of a TRP Tx PEG and a downlink positioning reference signal;
transmitting the second association relationship to the terminal.

In some embodiments, the method further includes:
transmitting second request information to the network device, where the second request information is used to request obtaining the correspondence between the identifier of the TRP Tx PEG and the downlink positioning reference signal.

In some embodiments, the method further includes:
correcting, according to the first information, a phase delay difference between phase measurements corresponding to different UE Rx PEGs and/or different TRP Tx PEGs;
calculating a location of the terminal based on a corrected phase measurement.

It should be noted that all implementations in the above embodiments are applicable to the embodiments of the information transmission method applied to the core network node side, and can achieve the same technical effects, which will not be repeated here.

As shown in FIG. 4, an embodiment of the present disclosure provides an information transmission method, performed by a network device, including:

Step S401: transmitting a second association relationship to a core network node, where the second association relationship is used to indicate a correspondence between an identifier of a transmission and reception point transmit phase error group (TRP Tx PEG) and a downlink positioning reference signal.

In some embodiments, the method further includes:
transmitting the downlink positioning reference signal to a terminal.

It should be noted that all implementations in the above embodiments are applicable to the embodiments of the information transmission method applied to the network device side, and can achieve the same technical effects, which will not be repeated here.

As shown in FIG. 5, an embodiment of the present disclosure provides an information transmission device 500, applied to a terminal, including:
a first obtaining unit 501, configured to obtain first information by measuring a downlink positioning reference signal sent by a network device according to a User Equipment receive phase error group (UE Rx PEG);
a first transmitting unit 502, configured to transmit the first information to a core network node;
where the first information includes: a phase measurement and/or a phase delay difference.

In some embodiments, when the first information includes the phase measurement, the first obtaining unit 501 is configured to implement one of the following:
measuring the same downlink positioning reference signal sent by the network device using different UE Rx PEGs, and obtaining phase measurements corresponding to the different UE Rx PEGs;
measuring different downlink positioning reference signals sent by the network device using the same UE Rx PEG, and obtaining phase measurements corresponding to different transmission and reception point transmit phase error groups (TRP Tx PEGs).

In some embodiments, when the first information includes the phase delay difference, the first obtaining unit 501 is configured to implement one of the following:
measuring the same downlink positioning reference signal sent by the network device using different UE Rx PEGs, and obtaining a phase delay difference between the different UE Rx PEGs;
measuring different downlink positioning reference signals sent by the network device using the same UE Rx PEG, and obtaining a phase delay difference between different TRP Tx PEGs.

In some embodiments, the UE Rx PEG satisfies at least one of the following:
the UE Rx PEG is associated with at least one phase measurement;
a receive phase error corresponding to the phase measurement included in the UE Rx PEG is within a first range;
where the receive phase error includes:
   a phase error of an uncalibrated reception radio frequency chain or a remaining reception radio frequency chain after calibration and/or a phase error of a reception antenna;
   a phase center offset of an uncalibrated reception antenna phase center (APC) or a remaining reception APC after calibration to a physical measurement reference point (MRP).

In some embodiments, the UE Rx PEG further includes: a time change rate of the receive phase error.

In some embodiments, a TRP Tx PEG satisfies at least one of the following:
the TRP Tx PEG is associated with at least one downlink positioning reference signal;
a transmit phase error corresponding to the downlink positioning reference signal included in the TRP Tx PEG is within a second range;
where the transmit phase error includes:
   a phase error of an uncalibrated transmission radio frequency chain or a remaining transmission radio frequency chain after calibration and/or a phase error of a transmission antenna;
   a phase center offset of an uncalibrated transmission APC or a remaining transmission APC after calibration to a physical antenna reference point (ARP).

In some embodiments, the TRP Tx PEG further includes: a time change rate of the transmit phase error.

In some embodiments, the device further includes:
a reporting unit, configured to report a first association relationship when the first information includes the phase measurement, where the first association relationship is used to indicate a correspondence between the UE Rx PEG and the phase measurement.

In some embodiments, the device further includes:
a second receiving unit, configured to receive first request information sent by the core network node, where the first request information is used to request the terminal to obtain the first information.

In some embodiments, the device further includes:
a third receiving unit, configured to receive a second association relationship sent by the core network node, where the second association relationship is used to indicate a correspondence between an identifier of a TRP Tx PEG and the downlink positioning reference signal.

In some embodiments, the TRP Tx PEG and a transmission and reception point transmission timing error group (TRP Tx TEG) are associated with the same downlink positioning reference signal;
and/or
the UE Rx PEG and a UE Rx TEG are associated with the same measurement.

It should be noted that the device embodiment is a device that corresponds one-to-one to the above-mentioned method embodiment. All implementations in the above-mentioned method embodiment are applicable to the device embodiment and can achieve the same technical effects.

It should be noted that the division of units in the embodiment of the present disclosure is schematic and is merely a logical function division. There may be other division methods in actual implementation. In addition, each functional unit in each embodiment of the present disclosure may be integrated into one processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it may be stored in a processor-readable storage medium. Based on this understanding, the technical solution of the present disclosure, or the part that contributes to the relevant technology, or all or part of the technical solution may be embodied in the form of a software product. The computer software product is stored in a storage medium and includes a number of instructions for enabling a computer device (which may be a personal computer, a server, or a network device, etc.) or a processor to perform all or part of the steps of the method described in each embodiment of the present disclosure. The aforementioned storage medium includes: U disk, mobile hard disk, read-only memory (ROM), random access memory (RAM), magnetic disk or optical disk, etc., which may store program codes.

As shown in FIG. 6, an embodiment of the present disclosure further provides a terminal, including a processor 600, a transceiver 610, a memory 620, and a program stored in the memory 620 and executable on the processor 600. The transceiver 610 is connected to the processor 600 and the memory 620 via a bus interface. The processor 600 is configured to read the program in the memory and perform following process:
obtaining first information by measuring a downlink positioning reference signal sent by a network device according to a User Equipment receive phase error group (UE Rx PEG);
transmitting, through the transceiver, the first information to a core network node;
where the first information includes: a phase measurement and/or a phase delay difference.

The transceiver 610 is configured to receive and transmit data under the control of the processor 600.

In FIG. 6, the bus architecture may include any number of interconnected buses and bridges, specifically linking various circuits of one or more processors represented by the processor 600 and a memory represented by the memory 620 together. The bus architecture may also link together various other circuits such as peripheral devices, voltage regulators, and power management circuits, which are all well known in the art and therefore will not be described further herein. The bus interface provides the interface. The transceiver 610 may be a plurality of components, including a transmitter and a receiver, providing a unit for communicating with various other devices over a transmission medium, such as a radio channel, a wired channel, an optical cable, or the like. For different user devices, the user interface 630 may also be an interface capable of connecting to external or internal devices as required, and the connected devices include but are not limited to a keypad, a display, a speaker, a microphone, a joystick, and the like.

The processor 600 is responsible for managing the bus architecture and general processing, and the memory 620 may store data used by the processor 600 when performing operations.

In some embodiments, the processor 600 may be a central processing unit (CPU), an application specific integrated circuit (ASIC), a field programmable gate array (FPGA), or a complex programmable logic device (CPLD). The processor may also adopt a multi-core architecture.

The processor calls the computer program stored in the memory to perform any of the methods provided in the embodiments of the present disclosure according to the obtained executable instructions. The processor and the memory may also be arranged physically separately.

In some embodiments, when the first information includes the phase measurement, the processor is configured to read the computer program in the memory and perform at least one of the following operations:
measuring the same downlink positioning reference signal sent by the network device using different UE Rx PEGs, and obtaining phase measurements corresponding to the different UE Rx PEGs;
measuring different downlink positioning reference signals sent by the network device using the same UE Rx PEG, and obtaining phase measurements corresponding to different transmission and reception point transmit phase error groups (TRP Tx PEGs).

In some embodiments, when the first information includes the phase delay difference, the processor is configured to read the computer program in the memory and perform at least one of the following operations:
measuring the same downlink positioning reference signal sent by the network device using different UE Rx PEGs, and obtaining a phase delay difference between the different UE Rx PEGs;
measuring different downlink positioning reference signals sent by the network device using the same UE Rx PEG, and obtaining a phase delay difference between different TRP Tx PEGs.

In some embodiments, the UE Rx PEG satisfies at least one of the following:
the UE Rx PEG is associated with at least one phase measurement;
a receive phase error corresponding to the phase measurement included in the UE Rx PEG is within a first range;
where the receive phase error includes:
   a phase error of an uncalibrated reception radio frequency chain or a remaining reception radio frequency chain after calibration and/or a phase error of a reception antenna;
   a phase center offset of an uncalibrated reception antenna phase center (APC) or a remaining reception APC after calibration to a physical measurement reference point (MRP).

In some embodiments, the UE Rx PEG further includes: a time change rate of the receive phase error.

In some embodiments, the TRP Tx PEG satisfies at least one of the following:
the TRP Tx PEG is associated with at least one downlink positioning reference signal;
a transmit phase error corresponding to the downlink positioning reference signal included in the TRP Tx PEG is within a second range;
where the transmit phase error includes:
   a phase error of an uncalibrated transmission radio frequency chain or a remaining transmission radio frequency chain after calibration and/or a phase error of a transmission antenna;
   a phase center offset of an uncalibrated transmission APC or a remaining transmission APC after calibration to a physical antenna reference point (ARP).

In some embodiments, the TRP Tx PEG further includes: a time change rate of the transmit phase error.

In some embodiments, when the first information includes the phase measurement, the processor is configured to read the computer program in the memory and further perform following operations:
reporting a first association relationship, where the first association relationship is used to indicate a correspondence between the UE Rx PEG and the phase measurement.

In some embodiments, the processor is configured to read the computer program in the memory and further perform following operations:
receiving, through the transceiver, first request information sent by the core network node, where the first request information is used to request the terminal to obtain the first information.

In some embodiments, the processor is configured to read the computer program in the memory and further perform following operations:
receiving, through the transceiver, a second association relationship sent by the core network node, where the second association relationship is used to indicate a correspondence between an identifier of a TRP Tx PEG and the downlink positioning reference signal.

In some embodiments, the TRP Tx PEG and a transmission and reception point transmission timing error group (TRP Tx TEG) are associated with the same downlink positioning reference signal;
and/or
the UE Rx PEG and a UE Rx TEG are associated with the same measurement.

It should be noted here that the above-mentioned terminal provided in the embodiment of the present disclosure can implement all the method steps implemented in the above-mentioned method embodiment and can achieve the same technical effects. The parts and beneficial effects of this embodiment that are the same as those in the method embodiment will not be described in detail here.

An embodiment of the present disclosure further provides a computer-readable storage medium having a computer program stored thereon, where when the computer program is executed by a processor, the steps of the information transmission method applied to a terminal are implemented. The processor-readable storage medium may be any available medium or data storage device that may be accessed by the processor, including but not limited to magnetic storage (such as floppy disk, hard disk, magnetic tape, magneto-optical disk (MO), etc.), optical storage (such as compact disk (CD), digital versatile disc (DVD), Blu-ray disc (BD), high-definition versatile disc (HVD), etc.), and semiconductor memory (such as read-only memory (ROM), erasable programmable read-only memory (EPROM), electrically erasable programmable read-only memory (EEPROM), non-volatile memory (NAND FLASH), Solid State Disk or Solid State Drive (SSD)), etc.

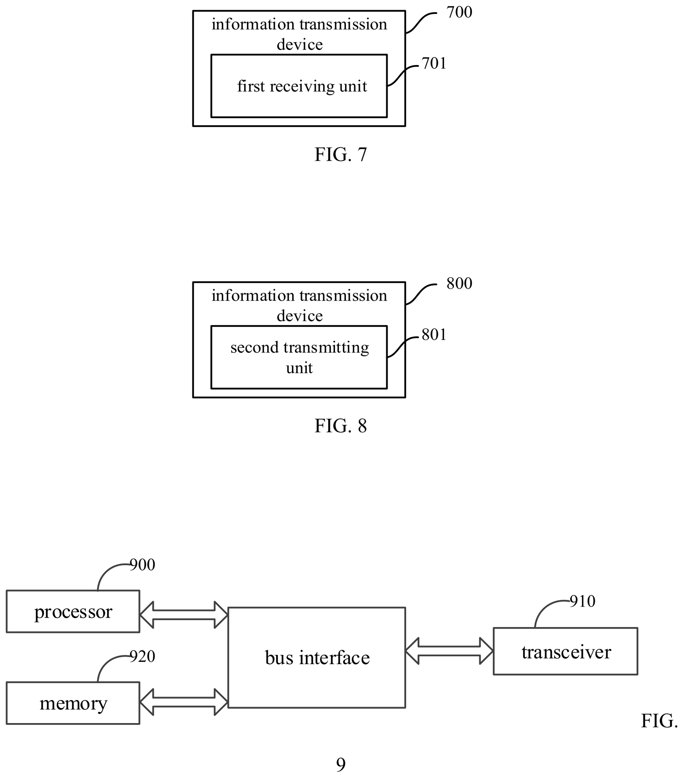

As shown in FIG. 7, an embodiment of the present disclosure provides an information transmission device 700, applied to a core network node, including:
a first receiving unit 701, configured to receive first information reported by a terminal;
where the first information includes: a phase measurement and/or a phase delay difference.

In some embodiments, the phase measurement includes at least one of the following:
phase measurements corresponding to different User Equipment receive phase error groups (UE Rx PEGs);
phase measurements corresponding to different transmission and reception point transmit phase error groups (TRP Tx PEGs).

In some embodiments, the phase delay difference includes at least one of the following:
a phase delay difference between different UE Rx PEGs;
a phase delay difference between different TRP Tx PEGs.

In some embodiments, the device further includes:
a fourth receiving unit, configured to receive a first association relationship sent by the terminal when the first information includes the phase measurement, where the first association relationship is used to indicate a correspondence between a UE Rx PEG and the phase measurement.

In some embodiments, the device further includes:
a third transmitting unit, configured to transmit first request information to the terminal, where the first request information is used to request the terminal to obtain the first information.

In some embodiments, the device further includes:
a fifth receiving unit, configured to receive a second association relationship sent by a network device, where the second association relationship is used to indicate a correspondence between an identifier of a TRP Tx PEG and a downlink positioning reference signal;
transmit the second association relationship to the terminal.

In some embodiments, the device further includes:
a fourth transmitting unit, configured to transmit second request information to the network device, where the second request information is used to request obtaining the correspondence between the identifier of the TRP Tx PEG and the downlink positioning reference signal.

In some embodiments, the device further includes:
a correcting unit, configured to correct, according to the first information, a phase delay difference between phase measurements corresponding to different UE Rx PEGs and/or different TRP Tx PEGs;
a calculating unit, configured to calculate a location of the terminal based on a corrected phase measurement.

It should be noted that the device embodiment is a device that corresponds one-to-one to the above-mentioned method embodiment. All implementations in the above-mentioned method embodiment are applicable to the device embodiment and can achieve the same technical effects.

It should be noted that the division of units in the embodiment of the present disclosure is schematic and is merely a logical function division. There may be other division methods in actual implementation. In addition, each functional unit in each embodiment of the present disclosure may be integrated into one processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it may be stored in a processor-readable storage medium. Based on this understanding, the technical solution of the present disclosure, or the part that contributes to the relevant technology, or all or part of the technical solution may be embodied in the form of a software product. The computer software product is stored in a storage medium and includes a number of instructions for enabling a computer device (which may be a personal computer, a server, or a network device, etc.) or a processor to perform all or part of the steps of the method described in each embodiment of the present disclosure. The aforementioned storage medium includes: U disk, mobile hard disk, read-only memory (ROM), random access memory (RAM), magnetic disk or optical disk, etc., which may store program codes.

As shown in FIG. 9, an embodiment of the present disclosure further provides a core network node, including a processor 900, a transceiver 910, a memory 920, and a program stored in the memory 920 and executable on the processor 900; where the transceiver 910 is connected to the processor 900 and the memory 920 via a bus interface, where the processor 900 is configured to read the program in the memory and perform the following process: where the processor is configured to read the computer program in the memory and perform following operations:
receiving, through the transceiver, first information reported by a terminal;
where the first information includes: a phase measurement and/or a phase delay difference.

The transceiver 910 is configured to receive and transmit data under the control of the processor 900.

In FIG. 9, the bus architecture may include any number of interconnected buses and bridges, specifically linking various circuits of one or more processors represented by the processor 900 and a memory represented by the memory 920 together. The bus architecture may also link together various other circuits such as peripheral devices, voltage regulators, and power management circuits, which are all well known in the art and therefore will not be described further herein. The bus interface provides the interface. The transceiver 910 may be a plurality of components, including a transmitter and a receiver, providing a unit for communicating with various other devices over a transmission medium, such as a radio channel, a wired channel, an optical cable, or the like. For different user devices, the user interface 930 may also be an interface capable of connecting to external or internal devices as required, and the connected devices include but are not limited to a keypad, a display, a speaker, a microphone, a joystick, and the like.

The processor 900 is responsible for managing the bus architecture and general processing, and the memory 920 may store data used by the processor 900 when performing operations.

In some embodiments, the processor 900 may be a CPU, an ASIC, an FPGA, or a CPLD, and the processor may also adopt a multi-core architecture.

The processor calls the computer program stored in the memory to perform any of the methods provided in the embodiments of the present disclosure according to the obtained executable instructions. The processor and the memory may also be arranged physically separately.

In some embodiments, the phase measurement includes at least one of the following:
phase measurements corresponding to different User Equipment receive phase error groups (UE Rx PEGs);
phase measurements corresponding to different transmission and reception point transmit phase error groups (TRP Tx PEGs).

In some embodiments, the phase delay difference includes at least one of the following:
a phase delay difference between different UE Rx PEGs;
a phase delay difference between different TRP Tx PEGs.

In some embodiments, when the first information includes the phase measurement, the processor is configured to read the computer program in the memory and further perform following operations:
receiving, through the transceiver, a first association relationship sent by the terminal, where the first association relationship is used to indicate a correspondence between a UE Rx PEG and the phase measurement.

In some embodiments, the processor is configured to read the computer program in the memory and further perform following operations:
transmitting, through the transceiver, first request information to the terminal, where the first request information is used to request the terminal to obtain the first information.

In some embodiments, the processor is configured to read the computer program in the memory and further perform following operations:
receiving, through the transceiver, a second association relationship sent by a network device, where the second association relationship is used to indicate a correspondence between an identifier of a TRP Tx PEG and a downlink positioning reference signal;
transmitting the second association relationship to the terminal.

In some embodiments, the processor is configured to read the computer program in the memory and further perform following operations:
transmitting, through the transceiver, second request information to the network device, where the second request information is used to request obtaining the correspondence between the identifier of the TRP Tx PEG and the downlink positioning reference signal.

In some embodiments, the processor is configured to read the computer program in the memory and further perform following operations:
correcting, according to the first information, a phase delay difference between phase measurements corresponding to different UE Rx PEGs and/or different TRP Tx PEGs;
calculating a location of the terminal based on a corrected phase measurement.

It should be noted here that the above-mentioned network device provided in the embodiment of the present disclosure can implement all the method steps implemented in the above-mentioned method embodiment and can achieve the same technical effect. The parts and beneficial effects of this embodiment that are the same as those in the method embodiment will not be described in detail here.

An embodiment of the present disclosure further provides a computer-readable storage medium having a computer program stored thereon, where when the computer program is executed by a processor, the steps of the information transmission method applied to a core network node are implemented. The processor-readable storage medium may be any available medium or data storage device that may be accessed by the processor, including but not limited to magnetic storage (such as floppy disk, hard disk, magnetic tape, magneto-optical disk, etc.), optical storage (such as CD, DVD, BD, HVD, etc.), and semiconductor storage (such as ROM, EPROM, EEPROM, non-volatile memory (NAND FLASH), solid state drive (SSD)), etc.

As shown in FIG. 8, an embodiment of the present disclosure provides an information transmission device 800, applied to a network device, including:
a second transmitting unit 801, configured to transmit a second association relationship to a core network node, where the second association relationship is used to indicate a correspondence between an identifier of a transmission and reception point transmit phase error group (TRP Tx PEG) and a downlink positioning reference signal.

In some embodiments, the device further includes:
a fifth transmitting unit, configured to transmit the downlink positioning reference signal to a terminal.

It should be noted that the device embodiment is a device that corresponds one-to-one to the above-mentioned method embodiment. All implementations in the above-mentioned method embodiment are applicable to the device embodiment and can achieve the same technical effects.

It should be noted that the division of units in the embodiment of the present disclosure is schematic and is merely a logical function division. There may be other division methods in actual implementation. In addition, each functional unit in each embodiment of the present disclosure may be integrated into one processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it may be stored in a processor-readable storage medium. Based on this understanding, the technical solution of the present disclosure, or the part that contributes to the relevant technology, or all or part of the technical solution may be embodied in the form of a software product. The computer software product is stored in a storage medium and includes a number of instructions for enabling a computer device (which may be a personal computer, a server, or a network device, etc.) or a processor to perform all or part of the steps of the method described in each embodiment of the present disclosure. The aforementioned storage medium includes: U disk, mobile hard disk, read-only memory (ROM), random access memory (RAM), magnetic disk or optical disk, etc., which may store program codes.

The embodiment of the present disclosure further provides a network device, the structure of which may be seen in FIG. 9 and will not be described in detail here.

The processor is configured to read the computer program in the memory and perform following operations:
transmitting, through the transceiver, a second association relationship to a core network node, where the second association relationship is used to indicate a correspondence between an identifier of a transmission and reception point transmit phase error group (TRP Tx PEG) and a downlink positioning reference signal.

In some embodiments, the processor is configured to read the computer program in the memory and further perform following operations:
transmitting, through the transceiver, the downlink positioning reference signal to a terminal.

It should be noted here that the above-mentioned network device provided in the embodiment of the present disclosure can implement all the method steps implemented in the above-mentioned method embodiment and can achieve the same technical effect. The parts and beneficial effects of this embodiment that are the same as those in the method embodiment will not be described in detail here.

An embodiment of the present disclosure further provides a computer-readable storage medium having a computer program stored thereon, where when the computer program is executed by a processor, the steps of the information transmission method applied to a network device are implemented. The processor-readable storage medium may be any available medium or data storage device that may be accessed by the processor, including but not limited to magnetic storage (such as floppy disk, hard disk, magnetic tape, magneto-optical disk, etc.), optical storage (such as CD, DVD, BD, HVD, etc.), and semiconductor storage (such as ROM, EPROM, EEPROM, non-volatile memory (NAND FLASH), solid state drive (SSD)), etc.

Those skilled in the art should appreciate that the embodiments of the present disclosure may be provided as methods, systems, or computer program products. Accordingly, the present disclosure may take the form of an entirely hardware embodiment, an entirely software embodiment, or an embodiment combining software and hardware aspects. Furthermore, the present disclosure may take the form of a computer program product embodied on one or more computer-usable storage media (including but not limited to magnetic disk storage and optical storage, etc.) containing computer-usable program codes.

The present disclosure is described with reference to flowcharts and/or block diagrams of methods, devices (systems), and computer program products according to embodiments of the disclosure. It should be understood that each process and/or block in the flowcharts and/or block diagrams, and combinations of processes and/or blocks in the flowcharts and/or block diagrams, may be implemented by computer-executable instructions. These computer-executable instructions may be provided to a processor of a general-purpose computer, a special-purpose computer, an embedded processor, or other programmable data processing device to produce a machine, so that the instructions executed by the processor of the computer or other programmable data processing device produce a device for implementing the functions specified in one or more processes in the flowchart and/or one or more blocks in the block diagram.

These processor-executable instructions may also be stored in a processor-readable memory that may direct the computer or other programmable data processing device to operate in a specific manner, so that the instructions stored in the processor-readable memory produce a product including an instruction device that implements the functions specified in one or more processes in the flowchart and/or one or more blocks in the block diagram.

These processor-executable instructions may also be loaded onto the computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more blocks in the block diagram.

It should be noted that it should be understood that the division of the above modules is merely a division of logical functions, and in actual implementation, they may be fully or partially integrated into one physical entity, or they may be physically separated. These modules may all be implemented in the form of software called by processing elements; they may also all be implemented in the form of hardware; or some modules may be implemented in the form of software called by processing elements, and some modules may be implemented in the form of hardware. For example, a determination module may be a separately established processing element, or it may be integrated into a chip of the above-mentioned device. In addition, it may also be stored in the memory of the above-mentioned device in the form of program code, and called by a processing element of the above-mentioned device to perform the function of the above-mentioned determination module. The implementation of other modules is similar. In addition, all or part of these modules may be integrated together or implemented independently. The processing element mentioned here may be an integrated circuit having a signal processing capability. During implementation, each step of the above method or each module above may be completed through hardware integrated logic circuits in a processor element or instructions in software form.

For example, each module, unit, sub-unit or sub-module may be one or more integrated circuits configured to implement the above method, such as: one or more application specific integrated circuits (ASICs), or, one or more microprocessors (digital signal processors, DSPs), or, one or more field programmable gate arrays (FPGAs), etc. For another example, when a certain module above is implemented in the form of a processing element scheduling a program code, the processing element may be a general-purpose processor, such as a central processing unit (CPU) or other processor that may call program codes. For another example, these modules may be integrated together and implemented in the form of a system-on-a-chip (SOC).

The terms "first", "second", and the like in the description and claims of the present disclosure are used to distinguish similar objects but not necessarily to describe a particular sequence or order. It is to be understood that the terms so used are interchangeable under appropriate circumstances such that the embodiments of the disclosure described herein may be practiced in sequences other than those illustrated or described herein. In addition, the terms "comprise" and "have" and any variations thereof are intended to cover a non-exclusive inclusion. For example, a process, method, system, product or device that includes a series of steps or elements is not necessarily limited to those steps or elements expressly listed but may include other steps or elements not expressly listed or inherent to such process, method, product or device. In addition, the use of "and/or" in the specification and claims indicates at least one of the connected objects, for example, A and/or B and/or C, indicating seven situations including A alone, B alone, C alone, both A and B exist, both B and C exist, both A and C exist, and A, B and C exist. Similarly, the use of "at least one of A and B" in this specification and claims should be understood as "A alone, B alone, or both A and B exist".

Obviously, those skilled in the art may make various modifications and variations to the present disclosure without departing from the spirit and scope of the present disclosure. Thus, if these modifications and variations of the present disclosure fall within the scope of the claims of the present disclosure and their equivalents, the present disclosure is intended to include these modifications and variations.

## Claims

1. An information transmission method, performed by a terminal, comprising:
obtaining first information by measuring a downlink positioning reference signal sent by a network device according to a User Equipment receive phase error group (UE Rx PEG);
transmitting the first information to a core network node;
wherein the first information comprises: a phase measurement and/or a phase delay difference.

2. The method according to claim 1, wherein, when the first information comprises the phase measurement, the obtaining first information by measuring a downlink positioning reference signal sent by a network device according to a UE Rx PEG comprises one of the following:
measuring the same downlink positioning reference signal sent by the network device using different UE Rx PEGs, and obtaining phase measurements corresponding to the different UE Rx PEGs;
measuring different downlink positioning reference signals sent by the network device using the same UE Rx PEG, and obtaining phase measurements corresponding to different transmission and reception point transmit phase error groups (TRP Tx PEGs).

3. The method according to claim 1 or 2, wherein, when the first information comprises the phase delay difference, the obtaining first information by measuring a downlink positioning reference signal sent by a network device according to a UE Rx PEG comprises one of the following:
measuring the same downlink positioning reference signal sent by the network device using different UE Rx PEGs, and obtaining a phase delay difference between the different UE Rx PEGs;
measuring different downlink positioning reference signals sent by the network device using the same UE Rx PEG, and obtaining a phase delay difference between different TRP Tx PEGs.

4. The method according to any one of claims 1 to 3, wherein the UE Rx PEG satisfies at least one of the following:
the UE Rx PEG is associated with at least one phase measurement;
a receive phase error corresponding to the phase measurement included in the UE Rx PEG is within a first range;
wherein the receive phase error comprises:
a phase error of an uncalibrated receive radio frequency chain or a remaining receive radio frequency chain after calibration and/or a phase error of a receive antenna;
a phase center offset of an uncalibrated receive antenna phase center (APC) or a remaining receive APC after calibration to a physical measurement reference point (MRP).

5. The method according to claim 4, wherein the UE Rx PEG further comprises: a time change rate of the receive phase error.

6. The method according to claim 2 or 3, wherein a TRP Tx PEG satisfies at least one of the following:
the TRP Tx PEG is associated with at least one downlink positioning reference signal;
a transmit phase error corresponding to the downlink positioning reference signal included in the TRP Tx PEG is within a second range;
wherein the transmit phase error comprises:
a phase error of an uncalibrated transmit radio frequency chain or a remaining transmit radio frequency chain after calibration and/or a phase error of a transmit antenna;
a phase center offset of an uncalibrated transmit APC or a remaining transmit APC after calibration to a physical antenna reference point (ARP).

7. The method according to claim 6, wherein the TRP Tx PEG further comprises: a time change rate of the transmit phase error.

8. The method according to claim 1 or 2, wherein, when the first information comprises the phase measurement, the method further comprises:
reporting a first association relationship, wherein the first association relationship is used to indicate a correspondence between the UE Rx PEG and the phase measurement.

9. The method according to any one of claims 1 to 3, further comprising:
receiving first request information sent by the core network node, wherein the first request information is used to request the terminal to obtain the first information.

10. The method according to any one of claims 1 to 3, further comprising:
receiving a second association relationship sent by the core network node, wherein the second association relationship is used to indicate a correspondence between an identifier of a TRP Tx PEG and the downlink positioning reference signal.

11. The method according to any one of claims 2 to 10, wherein the TRP Tx PEG and a transmission and reception point transmit timing error group (TRP Tx TEG) are associated with the same downlink positioning reference signal;
and/or
the UE Rx PEG and a UE Rx TEG are associated with the same measurement.

12. An information transmission method, performed by a core network node, comprising:
receiving first information reported by a terminal;
wherein the first information comprises: a phase measurement and/or a phase delay difference.

13. The method according to claim 12, wherein the phase measurement comprises at least one of the following:
phase measurements corresponding to different User Equipment receive phase error groups (UE Rx PEGs);
phase measurements corresponding to different transmission and reception point transmit phase error groups (TRP Tx PEGs).

14. The method according to claim 12 or 13, wherein the phase delay difference comprises at least one of the following:
a phase delay difference between different UE Rx PEGs;
a phase delay difference between different TRP Tx PEGs.

15. The method according to claim 13 or 14, wherein, when the first information comprises the phase measurement, the method further comprises:
receiving a first association relationship sent by the terminal, wherein the first association relationship is used to indicate a correspondence between a UE Rx PEG and the phase measurement.

16. The method according to any one of claims 12 to 15, further comprising:
transmitting first request information to the terminal, wherein the first request information is used to request the terminal to obtain the first information.

17. The method according to any one of claims 12 to 15, further comprising:
receiving a second association relationship sent by a network device, wherein the second association relationship is used to indicate a correspondence between an identifier of a TRP Tx PEG and a downlink positioning reference signal;
transmitting the second association relationship to the terminal.

18. The method according to claim 17, further comprising:
transmitting second request information to the network device, wherein the second request information is used to request obtaining the correspondence between the identifier of the TRP Tx PEG and the downlink positioning reference signal.

19. The method according to claim 13 or 14, further comprising:
correcting, according to the first information, a phase delay difference between phase measurements corresponding to different UE Rx PEGs and/or different TRP Tx PEGs;
calculating a location of the terminal based on a corrected phase measurement.

20. An information transmission method, performed by a network device, comprising:
transmitting a second association relationship to a core network node, wherein the second association relationship is used to indicate a correspondence between an identifier of a transmission and reception point transmit phase error group (TRP Tx PEG) and a downlink positioning reference signal.

21. The method according to claim 20, further comprising:
transmitting the downlink positioning reference signal to a terminal.

22. A terminal, comprising a memory, a transceiver, and a processor:
wherein the memory is configured to store a computer program; the transceiver is configured to transmit and receive data under the control of the processor; and the processor is configured to read the computer program in the memory and perform following operations:
obtaining first information by measuring a downlink positioning reference signal sent by a network device according to a User Equipment receive phase error group (UE Rx PEG);
transmitting, through the transceiver, the first information to a core network node;
wherein the first information comprises: a phase measurement and/or a phase delay difference.

23. The terminal according to claim 22, wherein, when the first information comprises the phase measurement, the processor is configured to read the computer program in the memory and perform at least one of the following operations:
measuring the same downlink positioning reference signal sent by the network device using different UE Rx PEGs, and obtaining phase measurements corresponding to the different UE Rx PEGs;
measuring different downlink positioning reference signals sent by the network device using the same UE Rx PEG, and obtaining phase measurements corresponding to different transmission and reception point transmit phase error groups (TRP Tx PEGs).

24. The terminal according to claim 22 or 23, wherein, when the first information comprises the phase delay difference, the processor is configured to read the computer program in the memory and perform at least one of the following operations:
measuring the same downlink positioning reference signal sent by the network device using different UE Rx PEGs, and obtaining a phase delay difference between the different UE Rx PEGs;
measuring different downlink positioning reference signals sent by the network device using the same UE Rx PEG, and obtaining a phase delay difference between different TRP Tx PEGs.

25. The terminal according to any one of claims 22 to 24, wherein the UE Rx PEG satisfies at least one of the following:
the UE Rx PEG is associated with at least one phase measurement;
a receive phase error corresponding to the phase measurement included in the UE Rx PEG is within a first range;
wherein the receive phase error comprises:
a phase error of an uncalibrated receive radio frequency chain or a remaining receive radio frequency chain after calibration and/or a phase error of a receive antenna;
a phase center offset of an uncalibrated receive antenna phase center (APC) or a remaining receive APC after calibration to a physical measurement reference point (MRP).

26. The terminal according to claim 25, wherein the UE Rx PEG further comprises: a time change rate of the receive phase error.

27. The terminal according to claim 23 or 24, wherein a TRP Tx PEG satisfies at least one of the following:
the TRP Tx PEG is associated with at least one downlink positioning reference signal;
a transmit phase error corresponding to the downlink positioning reference signal included in the TRP Tx PEG is within a second range;
wherein the transmit phase error comprises:
a phase error of an uncalibrated transmission radio frequency chain or a remaining transmission radio frequency chain after calibration and/or a phase error of a transmission antenna;
a phase center offset of an uncalibrated transmission APC or a remaining transmission APC after calibration to a physical antenna reference point (ARP).

28. The terminal according to claim 27, wherein the TRP Tx PEG further comprises: a time change rate of the transmit phase error.

29. The terminal according to claim 22 or 23, wherein, when the first information comprises the phase measurement, the processor is configured to read the computer program in the memory and further perform following operations:
reporting a first association relationship, wherein the first association relationship is used to indicate a correspondence between the UE Rx PEG and the phase measurement.

30. The terminal according to any one of claims 22 to 24, wherein the processor is configured to read the computer program in the memory and further perform following operations:
receiving, through the transceiver, first request information sent by the core network node, wherein the first request information is used to request the terminal to obtain the first information.

31. The terminal according to any one of claims 22 to 24, wherein the processor is configured to read the computer program in the memory and further perform following operations:
receiving, through the transceiver, a second association relationship sent by the core network node, wherein the second association relationship is used to indicate a correspondence between an identifier of a TRP Tx PEG and the downlink positioning reference signal.

32. The terminal according to any one of claims 23 to 31, wherein the TRP Tx PEG and a transmission and reception point transmission timing error group (TRP Tx TEG) are associated with the same downlink positioning reference signal;
and/or
the UE Rx PEG and a UE Rx TEG are associated with the same measurement.

33. A core network node, comprising a memory, a transceiver, and a processor:
wherein the memory is configured to store a computer program; the transceiver is configured to transmit and receive data under the control of the processor; and the processor is configured to read the computer program in the memory and perform following operations:
receiving, through the transceiver, first information reported by a terminal;
wherein the first information comprises: a phase measurement and/or a phase delay difference.

34. The core network node according to claim 33, wherein the phase measurement comprises at least one of the following:
phase measurements corresponding to different User Equipment receive phase error groups (UE Rx PEGs);
phase measurements corresponding to different transmission and reception point transmit phase error groups (TRP Tx PEGs).

35. The core network node according to claim 33 or 34, wherein the phase delay difference comprises at least one of the following:
a phase delay difference between different UE Rx PEGs;
a phase delay difference between different TRP Tx PEGs.

36. The core network node according to claim 34 or 35, wherein, when the first information comprises the phase measurement, the processor is configured to read the computer program in the memory and further perform following operations:
receiving, through the transceiver, a first association relationship sent by the terminal, wherein the first association relationship is used to indicate a correspondence between a UE Rx PEG and the phase measurement.

37. The core network node according to any one of claims 33 to 36, wherein the processor is configured to read the computer program in the memory and further perform following operations:
transmitting, through the transceiver, first request information to the terminal, wherein the first request information is used to request the terminal to obtain the first information.

38. The core network node according to any one of claims 33 to 36, wherein the processor is configured to read the computer program in the memory and further perform following operations:
receiving, through the transceiver, a second association relationship sent by a network device, wherein the second association relationship is used to indicate a correspondence between an identifier of a TRP Tx PEG and a downlink positioning reference signal;
transmitting the second association relationship to the terminal.

39. The core network node according to claim 38, wherein the processor is configured to read the computer program in the memory and further perform following operations:
transmitting, through the transceiver, second request information to the network device, wherein the second request information is used to request obtaining the correspondence between the identifier of the TRP Tx PEG and the downlink positioning reference signal.

40. The core network node according to claim 34 or 35, wherein the processor is configured to read the computer program in the memory and further perform following operations:
correcting, according to the first information, a phase delay difference between phase measurements corresponding to different UE Rx PEGs and/or different TRP Tx PEGs;
calculating a location of the terminal based on a corrected phase measurement.

41. A network device, comprising a memory, a transceiver, and a processor:
wherein the memory is configured to store a computer program; the transceiver is configured to transmit and receive data under the control of the processor; and the processor is configured to read the computer program in the memory and perform following operations:
transmitting, through the transceiver, a second association relationship to a core network node, wherein the second association relationship is used to indicate a correspondence between an identifier of a transmission and reception point transmit phase error group (TRP Tx PEG) and a downlink positioning reference signal.

42. The network device according to claim 41, wherein the processor is configured to read the computer program in the memory and further perform following operations:
transmitting, through the transceiver, the downlink positioning reference signal to a terminal.

43. An information transmission device, applied to a terminal, comprising:
a first obtaining unit, configured to obtain first information by measuring a downlink positioning reference signal sent by a network device according to a User Equipment receive phase error group (UE Rx PEG);
a first transmitting unit, configured to transmit the first information to a core network node;
wherein the first information comprises: a phase measurement and/or a phase delay difference.

44. The device according to claim 43, wherein, when the first information comprises the phase measurement, the first obtaining unit is configured to implement one of the following:
measuring the same downlink positioning reference signal sent by the network device using different UE Rx PEGs, and obtaining phase measurements corresponding to the different UE Rx PEGs;
measuring different downlink positioning reference signals sent by the network device using the same UE Rx PEG, and obtaining phase measurements corresponding to different transmission and reception point transmit phase error groups (TRP Tx PEGs).

45. The device according to claim 43 or 44, wherein, when the first information comprises the phase delay difference, the first obtaining unit is configured to implement one of the following:
measuring the same downlink positioning reference signal sent by the network device using different UE Rx PEGs, and obtaining a phase delay difference between the different UE Rx PEGs;
measuring different downlink positioning reference signals sent by the network device using the same UE Rx PEG, and obtaining a phase delay difference between different TRP Tx PEGs.

46. The device according to any one of claims 43 to 45, wherein the UE Rx PEG satisfies at least one of the following:
the UE Rx PEG is associated with at least one phase measurement;
a receive phase error corresponding to the phase measurement included in the UE Rx PEG is within a first range;
wherein the receive phase error comprises:
a phase error of an uncalibrated receive radio frequency chain or a remaining receive radio frequency chain after calibration and/or a phase error of a receive antenna;
a phase center offset of an uncalibrated receive antenna phase center (APC) or a remaining receive APC after calibration to a physical measurement reference point (MRP).

47. The device according to claim 46, wherein the UE Rx PEG further comprises: a time change rate of the receive phase error.

48. The device according to claim 44 or 45, wherein a TRP Tx PEG satisfies at least one of the following:
the TRP Tx PEG is associated with at least one downlink positioning reference signal;
a transmit phase error corresponding to the downlink positioning reference signal included in the TRP Tx PEG is within a second range;
wherein the transmit phase error comprises:
a phase error of an uncalibrated transmission radio frequency chain or a remaining transmission radio frequency chain after calibration and/or a phase error of a transmission antenna;
a phase center offset of an uncalibrated transmission APC or a remaining transmission APC after calibration to a physical antenna reference point (ARP).

49. The device according to claim 48, wherein the TRP Tx PEG further comprises: a time change rate of the transmit phase error.

50. The device according to claim 43 or 44, further comprising:
a reporting unit, configured to report a first association relationship when the first information comprises the phase measurement, wherein the first association relationship is used to indicate a correspondence between the UE Rx PEG and the phase measurement.

51. The device according to any one of claims 43 to 45, further comprising:
a second receiving unit, configured to receive first request information sent by the core network node, wherein the first request information is used to request the terminal to obtain the first information.

52. The device according to any one of claims 43 to 45, further comprising:
a third receiving unit, configured to receive a second association relationship sent by the core network node, wherein the second association relationship is used to indicate a correspondence between an identifier of a TRP Tx PEG and the downlink positioning reference signal.

53. The device according to any one of claims 44 to 52, wherein the TRP Tx PEG and a transmission and reception point transmission timing error group (TRP Tx TEG) are associated with the same downlink positioning reference signal;
and/or
the UE Rx PEG and a UE Rx TEG are associated with the same measurement.

54. An information transmission device, applied to a core network node, comprising:
a first receiving unit, configured to receive first information reported by a terminal;
wherein the first information comprises: a phase measurement and/or a phase delay difference.

55. The device according to claim 54, wherein the phase measurement comprises at least one of the following:
phase measurements corresponding to different User Equipment receive phase error groups (UE Rx PEGs);
phase measurements corresponding to different transmission and reception point transmit phase error groups (TRP Tx PEGs).

56. The device according to claim 54 or 55, wherein the phase delay difference comprises at least one of the following:
a phase delay difference between different UE Rx PEGs;
a phase delay difference between different TRP Tx PEGs.

57. The device according to claim 55 or 56, further comprising:
a fourth receiving unit, configured to receive a first association relationship sent by the terminal when the first information comprises the phase measurement, wherein the first association relationship is used to indicate a correspondence between a UE Rx PEG and the phase measurement.

58. The device according to any one of claims 54 to 57, further comprising:
a third transmitting unit, configured to transmit first request information to the terminal, wherein the first request information is used to request the terminal to obtain the first information.

59. The device according to any one of claims 54 to 57, further comprising:
a fifth receiving unit, configured to receive a second association relationship sent by a network device, wherein the second association relationship is used to indicate a correspondence between an identifier of a TRP Tx PEG and a downlink positioning reference signal;
transmit the second association relationship to the terminal.

60. The device according to claim 59, further comprising:
a fourth transmitting unit, configured to transmit second request information to the network device, wherein the second request information is used to request obtaining the correspondence between the identifier of the TRP Tx PEG and the downlink positioning reference signal.

61. The device according to claim 55 or 56, further comprising:
a correcting unit, configured to correct, according to the first information, a phase delay difference between phase measurements corresponding to different UE Rx PEGs and/or different TRP Tx PEGs;
a calculating unit, configured to calculate a location of the terminal based on a corrected phase measurement.

62. An information transmission device, applied to a network device, comprising:
a second transmitting unit, configured to transmit a second association relationship to a core network node, wherein the second association relationship is used to indicate a correspondence between an identifier of a transmission and reception point transmit phase error group (TRP Tx PEG) and a downlink positioning reference signal.

63. The device according to claim 62, further comprising:
a fifth transmitting unit, configured to transmit the downlink positioning reference signal to a terminal.

64. A processor-readable storage medium storing a computer program, wherein the computer program is configured to cause a processor to perform the method according to any one of claims 1 to 21.
